# EUROPEAN PATENT APPLICATION

(11) **EP 4 250 808 A1**
(43) Date of publication of application: **27.09.2023**
(21) Application number: 21911483.2
(22) Date of filing: 21.12.2021
(51) Int. Cl.: H04W 24/10, H04W 76/27, H04W 48/08, H04W 88/06, H04W 88/08

(54) **METHOD AND DEVICE FOR REPORTING MOBILITY HISTORY INFORMATION IN WIRELESS COMMUNICATION SYSTEM**

(30) Priority: 22.12.2020 KR 20200181358; 16.07.2021 KR 20210093663
(71) Applicant: Samsung Electronics Co., Ltd., Suwon-si, Gyeonggi-do 16677 (KR)
(72) Inventor: JUNG, Sangyeob, Suwon-si, Gyeonggi-do 16677 (KR); VAN DER VELDE, Himke, Staines, Middlesex TW18 4QE (GB)
(74) Representative: HGF
(86) International application number: PCT/KR2021/019522
(87) International publication number: WO 2022/139416

(57) **Abstract**

The present disclosure relates to a 5G or pre-5G communication system for supporting higher data transmission rates than 4G systems such as LTE. A method for a user equipment to perform event-based logging in a wireless communication system according to an embodiment of the present disclosure comprises the steps in which: the user equipment is in an RRC idle state (RRC_IDLE) or an RRC inactive state (RRC_INACTIVE) and confirms that a suitable or acceptable cell cannot be found; the user equipment confirms that the RPLMN when the suitable or acceptable cell could not be found is included in a PLMN ID list; the user equipment logs a serving cell ID that indicates a global cell ID of the suitable cell on which the user equipment most recently camped; and the user equipment logs a measurement result of the suitable cell on which the user equipment most recently camped.

## Description

### [Technical Field]

The disclosure relates to a technique for a LTE to report cell information to a base station in a mobile communication system.

### [Background Art]

In order to meet the demand for wireless data traffic soaring since the 4G communication system came to the market, there are ongoing efforts to develop enhanced 5G communication systems or pre-5G communication systems. For the reasons, the 5G communication system or pre-5G communication system is called the beyond 4G network communication system or post LTE system.

For higher data transmit rates, 5G communication systems are considered to be implemented on ultra-high frequency bands (mmWave), such as, e.g., 60GHz. To mitigate pathloss on the ultra-high frequency band and increase the reach of radio waves, the following techniques are taken into account for the 5G communication system: beamforming, massive multi-input multi-output (MIMO), full dimensional MIMO (FD-MIMO), array antenna, analog beamforming, and large scale antenna.

Also being developed are various technologies for the 5G communication system to have an enhanced network, such as evolved or advanced small cell, cloud radio access network (cloud RAN), ultra-dense network, device-to-device (D2D) communication, wireless backhaul, moving network, cooperative communication, coordinated multi-point (CoMP), and interference cancellation.

There are also other various schemes under development for the 5G system including, e.g., hybrid FSK and QAM modulation (FQAM) and sliding window superposition coding (SWSC), which are advanced coding modulation (ACM) schemes, and filter bank multi-carrier (FBMC), non-orthogonal multiple access (NOMA) and sparse code multiple access (SCMA), which are advanced access schemes.

Meanwhile, since the UE cannot know whether the current primary cell (PCell) may process (or support) the mobility history information logged for the secondary cell, a need arises for a method for transmitting and receiving mobility history information between the UE and the base station.

### [Detailed Description of the Invention]

### [Technical Problem]

The disclosure proposes a method for a LTE to report mobility history information about a logged cell to a base station when a primary secondary cell (PSCell) is added or changed.

### [Technical Solution]

An event-based logging method by a LTE in a wireless communication system according to an embodiment of the disclosure comprises identifying that the UE is in a radio resource control (RRC) idle state (RRC_IDLE) or RRC inactive state (RRC_INACTIVE) and fails to discover a suitable cell and an acceptable cell, identifying that a registered public land mobile network (RPLMN) when the UE fails to discover the suitable cell and the acceptable cell is included in a PLMN ID list, logging a serving cell ID indicating a global cell ID of a suitable cell on which the UE most recently camped, and logging a measurement result of the suitable cell on which the UE most recently camped.

A method for reporting mobility history information by a UE in a wireless communication system according to an embodiment of the disclosure comprises receiving, from a primary cell (PCell), system information including first information indicating that mobility history information about a secondary cell group (SCG) is supported, transmitting, to the PCell, a LTE capability information message (LTECapabilityInformation) including second information indicating that the mobility history information about the SCG may be stored, and transmitting, to the PCell, a UE information response message (UEInformationResponse) including the mobility history information about the SCG.

The method for reporting mobility history information by the UE may further comprise transmitting, to the PCell, a radio resource control (RRC) connection setup complete message including third information indicating that the UE has the mobility history information about the SCG.

The method for reporting mobility history information by the UE may further comprise receiving, from the PCell, a UE information request message (UEInformationRequest) including information for requesting the mobility history information about the SCG.

A method for receiving mobility history information by a base station of a primary cell (PCell) in a wireless communication system according to an embodiment of the disclosure comprises transmitting, to a LTE, system information including first information indicating that mobility history information about a secondary cell group (SCG) is supported, receiving, from the LTE, a LTE capability information message (LTECapabilityInformation) including second information indicating that the mobility history information about the SCG may be stored, and receiving, from the UE, a UE information response message (UEInformationResponse) including the mobility history information about the SCG.

The method for receiving mobility history information by a base station of the PCell may comprise receiving, from the UE, a radio resource control (RRC) connection setup complete message including third information indicating that the LTE has the mobility history information about the SCG.

The method for receiving mobility history information by the base station of the PCell may further comprise transmitting, to the UE, a UE information request message (UEInformationRequest) including information for requesting the mobility history information about the SCG.

A LTE performing event-based logging in a wireless communication system according to an embodiment of the disclosure comprises a transceiver and a processor. The processor may identify that the UE is in a radio resource control (RRC) idle state (RRC_IDLE) or RRC inactive state (RRC_INACTIVE) and fails to discover a suitable cell and an acceptable cell, identify that a registered public land mobile network (RPLMN) when the UE fails to discover the suitable cell and the acceptable cell is included in a PLMN ID list, log a serving cell ID indicating a global cell ID of a suitable cell on which the LTE most recently camped, and log a measurement result of the suitable cell on which the UE most recently camped.

A UE reporting mobility history information in a wireless communication system according to an embodiment of the disclosure comprises a transceiver and a controller connected with the transceiver to control the transceiver. The controller may control to receive, from a primary cell (PCell), system information including first information indicating that mobility history information about a secondary cell group (SCG) is supported, control to transmit, to the PCell, a LTE capability information message (LTECapabilityInformation) including second information indicating that the mobility history information about the SCG may be stored, and control to transmit, to the PCell, a UE information response message (UEInformationResponse) including the mobility history information about the SCG.

According to an embodiment, the controller may control to transmit, to the PCell, a radio resource control (RRC) connection setup complete message including third information indicating that the UE has the mobility history information about the SCG.

According to an embodiment, the controller may control to receive, from the PCell, a UE information request message (UEInformationRequest) including information for requesting the mobility history information about the SCG.

A base station positioned in a primary cell (PCell) in a wireless communication system to receive mobility history information according to an embodiment of the disclosure comprises a transceiver and a controller connected with the transceiver to control the transceiver. The controller may control to transmit, to a LTE, system information including first information indicating that mobility history information about a secondary cell group (SCG) is supported, control to receive, from the LTE, a UE capability information message (UECapabilityInformation) including second information indicating that the mobility history information about the SCG may be stored, and control to receive, from the UE, a UE information response message (UEInformationResponse) including the mobility history information about the SCG.

According to an embodiment, the controller may control to receive, from the LTE, a radio resource control (RRC) connection setup complete message including third information indicating that the UE has the mobility history information about the SCG.

According to an embodiment, the controller may control to transmit, to the UE, a UE information request message (UEInformationRequest) including information for requesting the mobility history information about the SCG.

### [Advantageous Effects]

In the method and device according to an embodiment of the disclosure, the LTE reports mobility history information about the cell recorded when the primary secondary cell (PSCell) is added or changed to the base station so that efficient communication between the UE and the base station is possible.

The method and device according to an embodiment of the disclosure may independently process legacy mobility history information (MHI) and the MHI about the secondary cell group, enabling efficient communication between the LTE and the base station.

### [Brief Description of Drawings]

FIG. 1 is a view illustrating a structure of an LTE system according to an embodiment of the disclosure;
FIG. 2 is a view illustrating a structure of a radio protocol in an LTE system according to an embodiment of the disclosure;
FIG. 3 is a view illustrating a structure of a next-generation mobile communication system according to an embodiment of the disclosure;
FIG. 4 is a view illustrating a structure of a radio protocol of a next-generation mobile communication system according to an embodiment of the disclosure;
FIG. 5 is a view illustrating a technique for collecting and reporting cell measurement information according to an embodiment of the disclosure;
FIG. 6 is a flowchart illustrating a process in which a LTE reports mobility history information to an LTE base station in an LTE system;
FIG. 7 is a view illustrating a LTE operation in which a LTE stores mobility history information and reports it to a base station in an LTE system;
FIG. 8 is a view illustrating a LTE operation in which a LTE stores secondary cell group (SCG) mobility history information (hereinafter, `SCG MHI') and reports it to a base station in an LTE system according to an embodiment of the disclosure;
FIG. 9 is a view illustrating a LTE operation in which a LTE stores secondary cell group (SCG) mobility history information (hereinafter, `SCG MHI') and reports it to a base station in an LTE system according to an embodiment of the disclosure;
FIG. 10 is a view illustrating a LTE operation in which a LTE stores secondary cell group (SCG) mobility history information (hereinafter, `SCG MHI') and reports it to a base station in an LTE system according to an embodiment of the disclosure;
FIG. 11 is a view illustrating a LTE operation in which a LTE reports secondary cell group (SCG) mobility history information (hereinafter, `SCG MHI') to a base station in an LTE system according to an embodiment of the disclosure;
FIG. 12 is a flowchart illustrating a process in which a LTE reports mobility history information to an NR base station in an NR system;
FIG. 13 is a view illustrating a LTE operation in which a LTE stores mobility history information and reports it to a base station in an NR system;
FIG. 14 is a view illustrating a LTE operation in which a LTE stores secondary cell group (SCG) mobility history information (hereinafter, `SCG MHI') and reports it to a base station in an NR system according to an embodiment of the disclosure;
FIG. 15 is a view illustrating a LTE operation in which a LTE stores secondary cell group (SCG) mobility history information (hereinafter, `SCG MHI') and reports it to a base station in an NR system according to an embodiment of the disclosure;
FIG. 16 is a view illustrating a LTE operation in which a LTE stores secondary cell group (SCG) mobility history information (hereinafter, `SCG MHI') and reports it to a base station in an NR system according to an embodiment of the disclosure;
FIG. 17 is a view illustrating a LTE operation in which a LTE reports secondary cell group (SCG) mobility history information (hereinafter, `SCG MHI') to a base station in an NR system according to an embodiment of the disclosure;
FIG. 18 is a view illustrating a LTE operation in which a LTE directly reports secondary cell group (SCG) mobility history information (hereinafter, `SCG MHI') to a secondary node (SN) in an NR system according to an embodiment of the disclosure;
FIG. 19 is a block diagram illustrating an internal structure of a LTE according to embodiments of the disclosure;
FIG. 20 is a block diagram illustrating a configuration of a base station according to embodiments of the disclosure;
FIG. 21 is a view illustrating a procedure in which a LTE performs measurement logging according to out of coverage based on an event set by an NR base station and reports the logged measurement value to the NR base station according to an embodiment of the disclosure; and
FIG. 22 is a view illustrating a procedure in which a LTE performs measurement logging according to out of coverage based on an event set by an NR base station and reports the logged measurement value to the NR base station according to an embodiment of the disclosure.

### [Mode for Carrying out the Invention]

Hereinafter, the operational principle of the disclosure is described below with reference to the accompanying drawings. When determined to make the subject matter of the present disclosure unclear, the detailed of the known functions or configurations may be skipped. The terms as used herein are defined considering the functions in the present disclosure and may be replaced with other terms according to the intention or practice of the user or operator. Therefore, the terms should be defined based on the overall disclosure.

When determined to make the subject matter of the disclosure unnecessarily unclear, the detailed description of known functions or configurations may be skipped in describing embodiments of the disclosure. Hereinafter, the disclosure is described in detail with reference to the accompanying drawings.

As used herein, terms for identifying access nodes, terms denoting network entities, terms denoting messages, terms denoting inter-network entity interfaces, and terms denoting various pieces of identification information are provided as an example for ease of description. Thus, the disclosure is not limited to the terms, and the terms may be replaced with other terms denoting objects with equivalent technical meanings.

For ease of description, hereinafter, some of the terms and names defined in the 3rd generation partnership project long term evolution (3GPP LTE) standards may be used in the disclosure. However, the disclosure is not limited by such terms and names and may be likewise applicable to systems conforming to other standards. In the disclosure, eNB may be used interchangeably with gNB for convenience of description. In other words, the base station described as an eNB may represent a gNB.

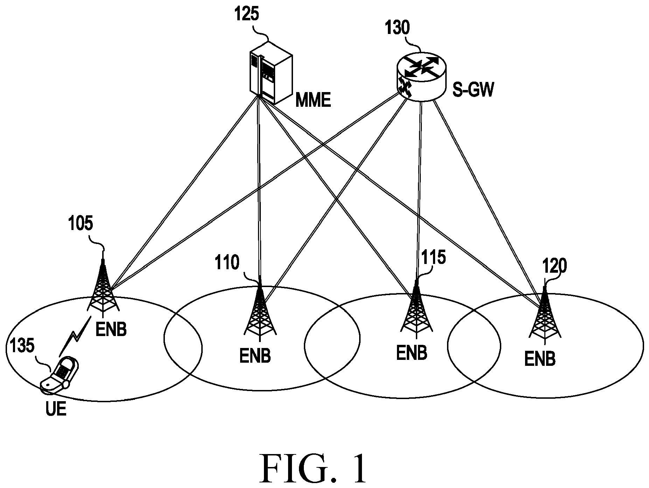

FIG. 1 is a view illustrating a structure of an LTE system according to an embodiment of the disclosure.

Referring to FIG. 1, a radio access network of the LTE system includes next-generation base stations (evolved node B--hereinafter, "ENB" or "base station") 1-05, 1-10, 1-15, and 1-20, a mobility management entity (MME) 1-25, and a serving gateway (S-GW) 1-30. A user equip equipment (hereinafter, "UE" or "terminal") 1-35 accesses an external network through the ENB 1-05 to 1-20 and the S-GW 1-30.

The ENBs 1-05 to 1-20 of FIG. 1 correspond to node Bs in the legacy universal mobile telecommunication system (UMTS) system. The ENB is connected with the LTE 1-35 through a wireless channel and plays a more complicated role than the legacy node B. Since in the LTE system all user traffic as well as real-time services, such as voice over Internet protocol (VoIP) service through an Internet protocol is serviced through a shared channel, there is needed an apparatus that performs scheduling by compiling state information, such as UEs' buffer states, available transmit power states, or channel states, and the ENBs 1-05 to 1-20 are in charge of the same. One ENB typically controls multiple cells. For example, the LTE system adopts, as a radio access technology, orthogonal frequency division multiplexing (hereinafter, "OFDM") on a 20MHz bandwidth in order to implement a transmission speed of 100Mbps. Further, the system applies adaptive modulation & coding (AMC) that determines a modulation scheme and a channel coding rate in compliance with the channel state of the UE. The S-GW 1-30 is a device providing a data bearer, and the serving gateway 130 generates or removes a data bearer under the control of the MME 1-25. The MME is an apparatus that is in charge of various control functions as well as mobility management functions for the UE and is connected with multiple base stations.

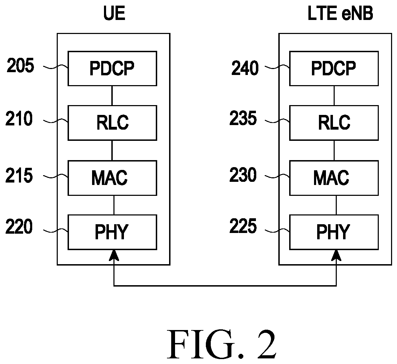

FIG. 2 is a view illustrating a structure of a radio protocol in an LTE system according to an embodiment of the disclosure.

Referring to FIG. 2, LTE system radio protocols include packet data convergence protocols (PDCPs) 2-05 and 2-40, radio link controls (RLCs) 2-10 and 2-35, and medium access controls (MACs) 2-15 and 2-30 for a UE and a base station, respectively. The packet data convergence protocols (PDCPs) 2-05 and 2-40 are in charge of IP header compression/reconstruction. The major functions of the PDCP may be summarized as follows.
- Header compression and decompression (ROHC only)
- Transfer of user data
- In-sequence delivery of upper layer PDUs at PDCP re-establishment procedure for RLC AM
- For split bearers in DC (only support for RLC AM), PDCP PDU routing for transmission and PDCP PDU reordering for reception
- Duplicate detection of lower layer SDUs at PDCP re-establishment procedure for RLC AM
- Retransmission of PDCP SDUs at handover and, for split bearers in DC, of PDCP PDUs at PDCP data-recovery procedure, for RLC AM
- Ciphering and deciphering
- Timer-based SDU discard in uplink
- The RLCs 2-10 and 2-35 reconfigure packet data units (PDUs) into a proper size and perform ARQ operations. The major functions of the RLC may be summarized as follows.
- Transfer of upper layer PDUs
- Error correction through ARQ (only for AM data transfer)
- Concatenation, segmentation and reassembly of RLC SDUs (only for UM and AM data transfer)
- Re-segmentation of RLC data PDUs (only for AM data transfer)
- Reordering of RLC data PDUs (only for UM and AM data transfer)
- Duplicate detection (only for UM and AM data transfer)
- Protocol error detection (only for AM data transfer)
- RLC SDU discard (only for UM and AM data transfer)
- RLC re-establishment

The MACs 2-15 and 2-30 are connected with several RLC layer devices configured in one LTE, multiplex the RLC PDUs into a MAC PDU and demultiplex the MAC PDU into RLC PDUs. The major functions of the MAC may be summarized as follows.
- Mapping between logical channels and transport channels
- Multiplexing/demultiplexing of MAC SDUs belonging to one or different logical channels into/from transport blocks (TB) delivered to/from the physical layer on transport channels
- Scheduling information reporting
- Error correction through HARQ
- Priority handling between logical channels of one UE
- Priority handling between UEs by means of dynamic scheduling
- MBMS service identification
- Transport format selection
- Padding

The physical layers 2-20 and 2-25 channel-code and modulate higher layer data into OFDM symbols, transmit the OFDM symbols through a wireless channel or demodulates OFDM symbols received through a wireless channel, channel-decodes and transfers the same to a higher layer.

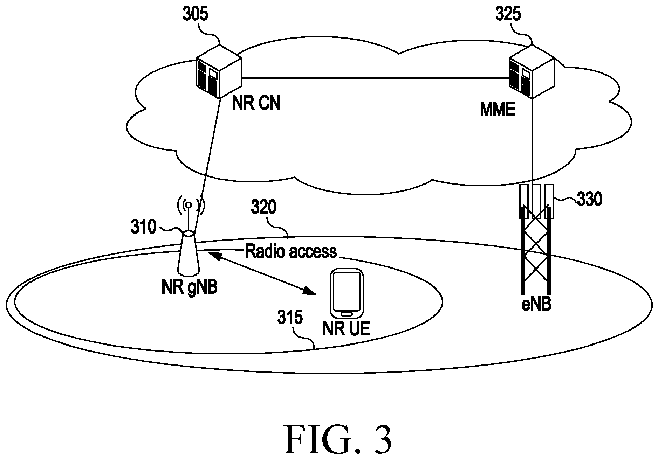

FIG. 3 is a view illustrating a structure of a next-generation mobile communication system according to an embodiment of the disclosure.

Referring to FIG. 3, as shown, a radio access network of a next-generation mobile communication system (hereinafter, NR or 2g) includes a next-generation base station (new radio node B, hereinafter NR gNB or NR base station) 3-10 and a new radio core network (NR CN) 3-05. A new radio user equipment (hereinafter, NR UE or terminal) 3-15 accesses an external network through the NR gNB 3-10 and the NR CN 3-05.

In FIG. 3, the NR gNB 3-10 corresponds to the evolved node B (eNB) of the legacy LTE system. The NR gNB is connected with the NR UE 3-15 via a radio channel and may provide a superior service to that of the legacy node B. Since in the next-generation mobile communication system, all user traffic is serviced through a shared channel, there is needed an apparatus that performs scheduling by compiling state information, such as UEs' buffer states, available transmit power states, or channel states, and the NR NB 3-10 is in charge of the same. One NR gNB typically controls multiple cells. To implement ultra-high data rate transmission as compared with the current LTE, a bandwidth higher than the existing maximum bandwidth may be provided, and the orthogonal frequency division multiplexing (hereinafter, OFDM) may be used as the radio access technology, and beamforming technology may be additionally combined. Further, the system applies adaptive modulation & coding (AMC) that determines a modulation scheme and a channel coding rate in compliance with the channel state of the UE. The NR CN 3-05 performs functions, such as mobility support, bearer setup, and QoS setup. The NR CN is an apparatus that is in charge of various control functions as well as mobility management functions for the UE and is connected with multiple base stations. Further, the next-generation mobile communication system may be linked with the legacy LTE system. The NR CN is connected to the MME 3-25 through a network interface. The MME is connected to the eNB 3-30, which is a legacy base station.

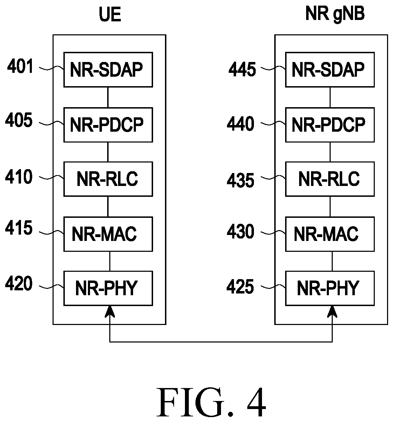

FIG. 4 is a view illustrating a structure of a radio protocol of a next-generation mobile communication system according to an embodiment of the disclosure.

FIG. 4 is a view illustrating a structure of a radio protocol of a next-generation mobile communication system to which the disclosure is applicable.

Referring to FIG. 4, the radio protocols for the next-generation mobile communication system include NR SDAPs 4-01 and 4-45, NR PDCPs 4-05 and 4-40, NR RLCs 4-10 and 4-35, and NR MACs 4-15 and 4-30, in the NR and the base station, respectively.

The main functions of the NR SDAPs 4-01 and 4-45 may include some of the following functions.
- Transfer of user plane data
- Mapping between a QoS flow and a DRB for both DL and LTL
- Marking QoS flow ID in both DL and UL packets
- Reflective QoS flow to DRB mapping for the UL SDAP PDUs.

For the SDAP layer device, the UE may be set, via an RRC message, for whether to use the functions of the SDAP layer or the header of the SDAP layer device per PDCP layer device, per bearer, or per logical channel. If an SDAP header has been set, the LTE may be instructed to update or reset mapping information for the data bearer and QoS flow of uplink and downlink, by a one-bit NAS reflective QoS indicator and a one-bit AS reflective QoS indicator. The SDAP header may include QoS flow ID information indicating QoS. The QoS information may be used as data priority handling or scheduling information for seamlessly supporting a service.

The main functions of the NR PDCPs 4-05 and 4-40 may include some of the following functions.

Header compression and decompression (ROHC only)
- Transfer of user data
- In-sequence delivery of upper layer PDUs
   - Out-of-sequence delivery of upper layer PDUs
   - PDCP PDU reordering for reception
   - Duplicate detection of lower layer SDUs
   - Retransmission of PDCP SDUs
   - Ciphering and deciphering
   - Timer-based SDU discard in uplink

The reordering by the NR PDCP refers to reordering PDCP PDUs received by the lower layer based on the PDCP sequence numbers (SNs) and may include transferring the data to the higher layer in the reordered sequence or immediately without considering order, recording PDCP PDUs missed by reordering, reporting the state of the missing PDCP PDUs to the transmit part, and requesting to retransmit the missing PDCP PDUs.

The main functions of the NR RLCs 4-10 and 4-35 may include some of the following functions.
- Transfer of upper layer PDUs
- In-sequence delivery of upper layer PDUs
- Out-of-sequence delivery of upper layer PDUs
- Error correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

The in-sequence delivery by the NR RLC device refers to transferring the RLC SDUs received from the lower layer to the higher layer in order and, if one original RLC SDU is split into several RLC SDUs that are then received, the in-sequence delivery may include reassembling and transferring them, reordering the received RLC PDUs based on the RLC SNs or PDCP SNs, recording the RLC PDUs missed by reordering, reporting the state of the missing RLC PDUs to the transmit part, and requesting to retransmit the missing RLC PDUs and, if there are missing RLC SDUs, the in-sequence delivery may include transferring only RLC SDUs before the missing RLC SDUs to the higher layer in order. Although there are missing RLC SDUs, if a predetermined timer has expired, the in-sequence delivery may include transferring all of the RLC SDUs received before the timer starts to the higher layer in order. Or, although there are missing RLC SDUs, if the predetermined timer has expired, the in-sequence delivery may include transferring all of the RLC SDUs received thus far to the higher layer in order. Further, the RLC PDUs may be processed in order of reception (in order of arrival regardless of the sequence number order) and delivered to the PDCP device regardless of order (out-of-sequence delivery). For segments, segments which are stored in a buffer or are to be received later may be received and reconstructed into a single whole RLC PDU, and then, the whole RLC PDU is processed and transferred to the PDCP device. The NR RLC layer may not include the concatenation function, and the function may be performed by the NR MAC layer or replaced with a multiplexing function of the NR MAC layer.

The out-of-sequence delivery by the NR RLC device refers to immediately transferring the RLC SDUs received from the lower layer to the higher layer regardless of order and, if one original RLC SDU is split into several RLC SDUs that are then received, the out-of-sequence delivery may include reassembling and transferring them and storing the RLC SNs or PDCP SNs of the received RLC PDUs, ordering them, and recording missing RLC PDUs.

The NR MACs 4-15 and 4-30 may be connected to several NR RLC layer devices configured in one UE, and the major functions of the NR MAC may include some of the following functions.
- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

The NR PHY layers 4-20 and 4-25 channel-code and modulate higher layer data into OFDM symbols, transmit the OFDM symbols through a wireless channel or demodulates OFDM symbols received through a wireless channel, channel-decodes and transfers the same to a higher layer.

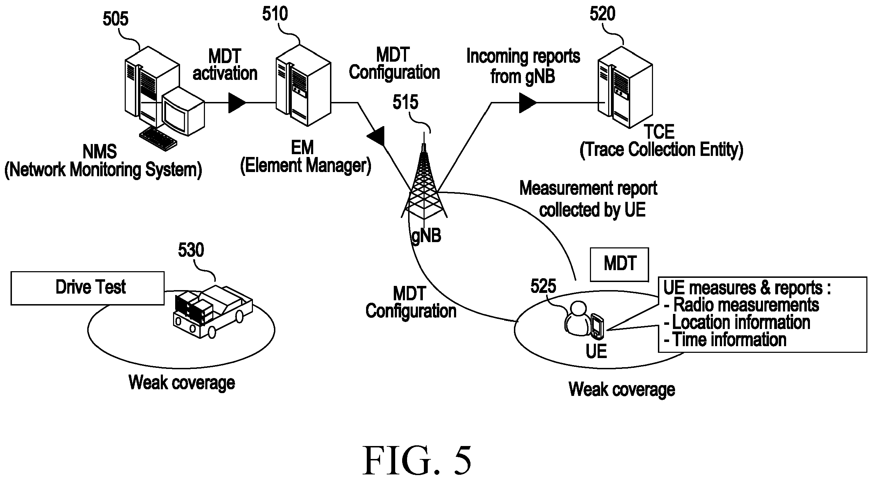

FIG. 5 is a view illustrating a technique for collecting and reporting cell measurement information according to an embodiment of the disclosure.

When establishing or optimizing a network, a mobile communication service provider usually measures the signal strength in the expected service area and, based thereupon, deploys or readjusts base stations in the service area. The operator loads signal measurement equipment on the vehicle and collects cell measurement information in the service area, which requires a lot of time and money.

The process is generally referred to as a drive test (5-30) as it uses a vehicle. AUE is equipped with a function capable of measuring a signal to a base station to support operations such as cell reselection, handover (HO), and addition of a serving cell when moving between cells.

Accordingly, instead of the drive test, the UE 5-25 in the service area may be utilized, which is referred to as a minimization of drive test (MDT). The operator may configure the MDT operation for specific LTEs through various component devices 5-05, 5-10, and 5-15 of the network, and the UEs collect and store signal strength information from the serving cell and neighboring cells in the RRC connected mode (RRC _CONNECTED), the RRC idle mode (RRC_IDLE), or the RRC inactive mode (RRC_INACTIVE). In addition, various information such as location information, time information, and signal quality information are also stored. The stored information may be reported to the network 5-15 when the UEs are in the connected mode, and the information is transmitted to a specific server 5-20.

The MDT operations are largely classified into immediate MDT and logged MDT.

Immediate MDT is characterized by reporting the collected information directly to the network. Since it is necessary to report immediately, only the RRC connected mode UE may perform this. In general, an RRM measurement process for supporting operations such as handover and serving cell addition is utilized again, and location information, time information, and the like are additionally reported.

Logged MDT stores the collected information without immediately reporting it to the network, and after the UE switches to the RRC connected mode, reports the stored information. This is usually performed by the UE in the RRC idle mode or the RRC inactivated mode that may not be directly reported to the network.

In the disclosure, the UE in the RRC inactive mode introduced in the next-generation mobile communication system performs the logged MDT. The network provides configuration information for performing the logged MDT operation to the UE when the specific LTE is in the RRC connected mode, and the LTE collects and stores the configuration information after switching to the RRC idle mode or the RRC inactive mode. The RRC states of the UE performing the immediate MDT and the logged MDT operation may be shown in Table 1 below.

**[Table 1]**

| | RRC state |
|---|---|
| Immediate MDT | RRC_CONNECTED |
| Logged MDT | RRC_IDLE, RRC_INACTIVE |

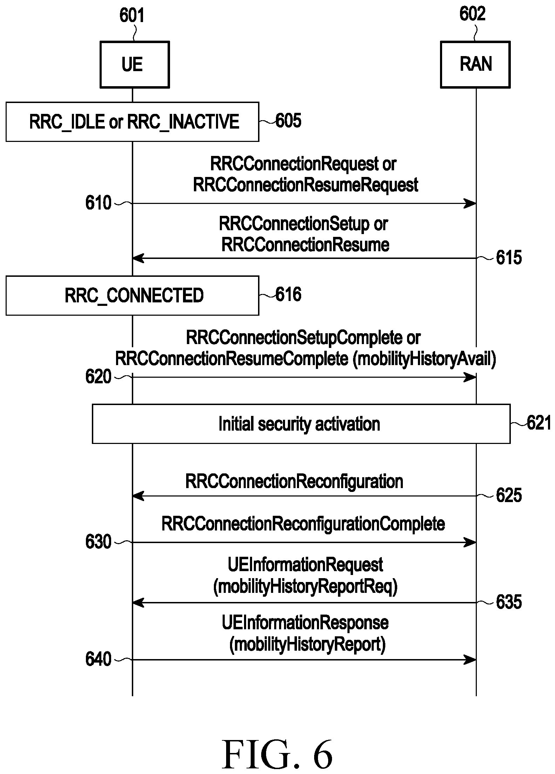

FIG. 6 is a flowchart illustrating a process in which a LTE reports mobility history information to an LTE base station in an LTE system.

Referring to FIG. 6, the LTE 6-01 may be in the RRC idle mode (RRC_IDLE) or the RRC inactive mode (RRC_INACTIVE).

The RRC idle mode UE 6-01 may transmit (6-10) an RRC connection request message (RRCConnectionRequest) to the base station to perform an RRC connection setup procedure with the base station 6-02. Upon receiving the RRC connection request message, the base station 6-02 may transmit (6-15) an RRC connection setup message (RRCConnectionSetup) to the UE 6-01 in response thereto. The UE receiving the RRC connection setup message may apply the RRC connection setup message and transition to the RRC connected mode (6-16). Then, the RRC connected mode UE may transmit an RRC connection setup complete message (RRCConnectionSetupComplete) to the base station (6-20). If the LTE supports storage of mobility history information, and mobility history information is present in the VarMobilityHistoryReport (If the UE supports storage of mobility history information and the UE has mobility history information available in VarMobilityHistoryReport), the UE may include the mobilityHistoryAvail indicator in the RRC connection setup complete message and transmit it to the base station (6-20).

The RRC inactive mode UE 6-01 may transmit an RRC connection resume request message (RRCConnectionResumeRequest) to the base station 6-10 to perform an RRC connection resume procedure with the base station 6-02. Upon receiving the RRC connection resume request message, the base station 6-02 may transmit (6-15) an RRC connection resume message (RRCConnectionResume) to the UE 6-01 in response thereto. The UE receiving the RRC connection resume message may apply the RRC connection resume message and transition to the RRC connected mode (6-16). Then, the RRC connected mode UE may transmit (6-20) an RRC connection resume complete message (RRCConnectionResumeComplete) to the base station. If the LTE supports storage of mobility history information, and mobility history information is present in the VarMobilityHistoryReport (If the LTE supports storage of mobility history information and the UE has mobility history information available in VarMobilityHistoryReport), the UE may include the mobilityHistoryAvail indicator in the RRC connection resume complete message and transmit it to the base station (6-20).

The UE 6-01 that has not configured security may perform an initial security activation procedure with the base station 6-02 (6-21). For example, the LTE that does not configure security may refer to a UE that has switched from the RRC idle mode to the RRC connected mode. Specifically, the UE 6-01 may transmit a security mode command message (SecurityModeCommand) to the base station 6-02, and in response thereto, the base station may transmit a security mode completion message (SecurityModeComplete) to the UE.

In order to perform the RRC connection reconfiguration procedure in step 6-25, the base station 6-02 may transmit an RRC connection reconfiguration message (RRCConnectionReconfiguration) to the RRC connected mode UE 6-01. The UE may apply the received RRC connection reconfiguration message and may transmit (6-30) an RRC connection reconfiguration complete message (RRCConnectionReconfigurationComplete) to the base station in response thereto.

In step 6-35, the base station 6-02 may perform a UE information procedure when security activation is successfully performed. The base station 6-02 may transmit (6-35) a LTE information request message (UEInformationRequest) to the LTE to request mobility history information from the UE 6-01. The UE information request message may include a MobilityHistoryReportReq indicator.

In step 6-40, the LTE 6-01 that successfully performs security activation may transmit (6-40) a LTE information response (LTEInformationResponse) to the base station 6-02. If mobilityHistoryReportReq is set to true in the received UE information request message, the UE may perform the following series of procedures.
- may include information in VarMobilityHistoryReport, in mobilityHistoryReport (include the *mobilityHistoryReport* and set it to include entries from *VarMobilityHistoryReport*)
- if necessary, the oldest information may be deleted, and information about the current cell may be included in the mobilityHistoryReport as follows (include in the *mobilityHistoryReport* an entry for the current cell, possibly after removing the oldest entry if required, set its fields as follows)
- may set the global cell identifier of the current cell to visitedCellId (set *visitedCellld* to the global cell identity of the current cell)
- may set the time spent in the current cell in the timeSpent field (set field *timeSpent* to the time spent in the current cell)
- The UE may perform the above-described procedures to include the mobilityHistoryReport in the UE information response message and transmit it to the base station (6-40).

The LTE according to the LTE system has the following characteristics in storing mobility history information and reporting it to the LTE base station.
- The UE does not transmit a separate UE capability information message (UECapabilityInformation) to the base station to let the UE know whether it is supported to store the mobility history information. Instead, the UE transmits an RRC connection setup complete message or RRC connection resume complete message including the mobility Hi story Avail indicator only when storing of mobility history information is supported, and the mobility history information is present in VarMobilityHistoryReport.
- The LTE does not store information about the PSCell which it has accessed or camped on in the mobility history information.
- The UE stores only the cell information list for staying in the RRC idle mode or the RRC inactive mode, the time information for staying in each cell, the cell information list for staying in the RRC connected mode, and the time information for staying in each cell in the mobility history information and reports the information to the base station.

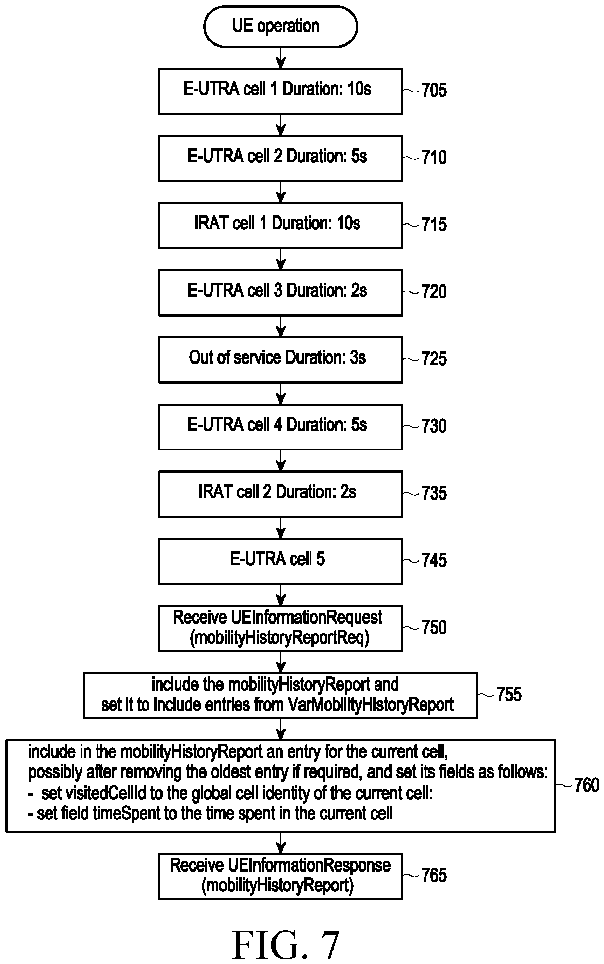

FIG. 7 is a view illustrating a LTE operation in which a LTE stores mobility history information and reports it to a base station in an LTE system.

A UE supporting to store mobility history information may have the (suitable) serving cell changed in the RRC idle mode (RRC_IDLE) or RRC inactive mode (RRC_INACTIVE) or have the PCell changed in the RRC connected mode (RRC_CONNECTED) or may enter out of service (e.g., when it camps on or accesses no cell, which may mean any cell selection state).

The LTE according to an embodiment of the disclosure may store the mobility history information in the VarMobilityHistoryReport by performing an operation according to the following conditions.
- Condition 1-1: When the cell constituted of the PCell in the RRC connected mode or the serving cell in RRC_IDLE is changed (i.e., when it is changed to another E-UTRA cell or inter-RAT cell) or when it enters out of service (upon change of cell, consisting of PCell in RRC_CONNECTED or serving cell in RRC_IDLE, to another E-UTRA or inter-RAT cell) or when entering out of service
- Condition 1-2: When the cell constituted of the PCell in the RRC connected mode or the serving cell (E-UTRA cell) in RRC_INACTIVE or the serving cell (E-UTRA cell or inter-RAT cell) in RRC_IDLE is changed (i.e., when it is changed to another E-UTRA cell or changed to inter-RAT cell) or when entering from the camped normally state in LTE or inter-RAT to any cell selection state (upon change of suitable cell, consisting of PCell in RRC_CONNECTED or serving cell in RRC_INACTIVE (for E-UTRA cell) or in RRC_IDLE (for E-UTRA or inter-RAT cell), to another E-UTRA or inter-RAT cell or when entering any cell selection state from camped normally state in LTE or inter-RAT

Operation 1: When condition 1-1 or condition 1-2 is met,

If necessary, the oldest entry value is deleted, and the following may be included in the entry in the VarMobilityHistoryReport variable (include an entry in variable VarMobilityHistoryReport possibly after removing the oldest entry, if necessary, according to the following)

If there is the global cell identifier of the previous PCell or serving cell, the global cell identifier of the previous PCell or serving cell may be stored in the visitedCellId field (if the global cell identity of the previous PCell/ serving cell is available, include the global cell identity of that cell in the field *visitedCellld* of the entry). Otherwise, the carrier frequency and physical cell identifier of the previous PCell or serving cell may be stored in the visitedCellId field (else, include the physical cell identity and carrier frequency of that cell in the field *visitedCellld* of the entry). The time spent in the previous PCell or serving cell may be stored in the timeSpent field (set the field *timeSpent* of the entry as the time spent in the previous PCell/ serving cell)
- Condition 2-1: Previously out of service and using another RAT (i.e., an RAT other than E-UTRA), and then enters E-UTRA in RRC_CONNECTED or RRC_IDLE. Or, previously out of service or using another RAT, and then enters E-UTRA (upon entering E-UTRA (in RRC_CONNECTED or RRC_IDLE) while previously out of service and/ or using another RAT)
- Condition 2-2: Previously in any cell selection state, or in the camped on any cell state in LTE or inter-RAT, and then enters camped normally state to E-UTRA in RRC_CONNECTED or RRC_IDLE or RRC_INACTIVE (upon entering camped normally state in E-UTRA (in RRC_CONNECTED, RRC_IDLE, RRC_INACTIVE) while previously in 'any cell selection' state or 'camped on any cell' state in LTE or inter-RAT)

Operation 2: When condition 2-1 or condition 2-2 is met,

If necessary, the oldest entry value is deleted, and the following may be included in the entry in the VarMobilityHistoryReport variable (include an entry in variable VarMobilityHistoryReport possibly after removing the oldest entry, if necessary, according to the following)

The time spent out of E-UTRA may be stored in the timeSpent field (set the field timeSpent of the entry as the time spent outside E-UTRA), or the time spent in any cell selection state and/or camped on any cell state in LTE or inter-RAT may be stored in the timeSpent field (set the field timeSpent of the entry as the time spent in 'any cell selection' state and/or 'camped on any cell' state in LTE or inter-RAT

For reference, the inter-RAT specified above may mean all inter-RAT cells, or may mean only some inter-RAT cells (e.g., NR cells) among the inter-RAT cells.

Referring to FIG. 7, the UE may store the mobility history information in the VarMobilityHistoryReport according to the above-described method from steps 7-05 to 7-45. For example, the LTE may store at least one of the following information in VarMobilityHistoryReport.
- Global cell identifier or carrier frequency and physical cell identifier for E-UTRA cell 1, and time 10s spent in E-UTRA cell 1 (7-05)
- Global cell identifier or carrier frequency and physical cell identifier for E-UTRA cell 2, and time 5s spent in E-UTRA cell 2 (7-10)
- Time 10s spent in IRAT (inter-RAT) cell 1 or global cell identifier or carrier frequency and physical cell identifier for IRAT (inter-RAT) cell 1, and time 10s spent in IRAT (inter-RAT) cell 1 (7-15)
- Global cell identifier or carrier frequency and physical cell identifier for E-UTRA cell 3, and time 2s spent in E-UTRA cell 3 (7-20)
- Time 3s spent out of service (7-25)
- Global cell identifier or carrier frequency and physical cell identifier for E-UTRA cell 4, and time 5s spent in E-UTRA cell 4 (7-30)
- Time 2s spent in IRAT (inter-RAT) cell 2 or global cell identifier or carrier frequency and physical cell identifier for IRAT (inter-RAT) cell 2, and time 2s spent in IRAT (inter-RAT) cell 2 (7-13)
- Global cell identifier or carrier frequency and physical cell identifier for E-UTRA cell 5, and time 5s spent in E-UTRA cell 5 (7-30)

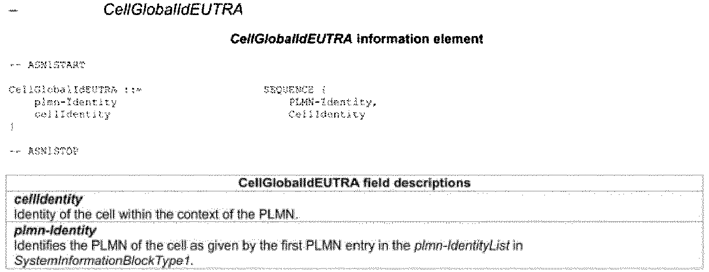

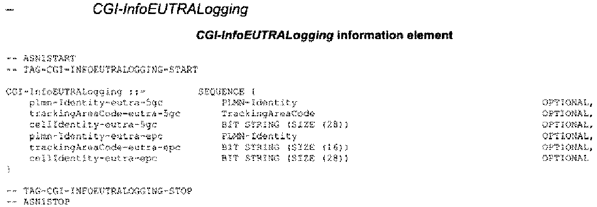

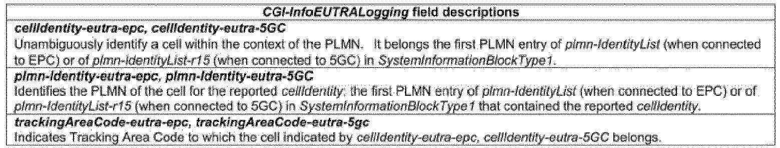

For reference, the global cell identifier for the NR cell may mean the following.

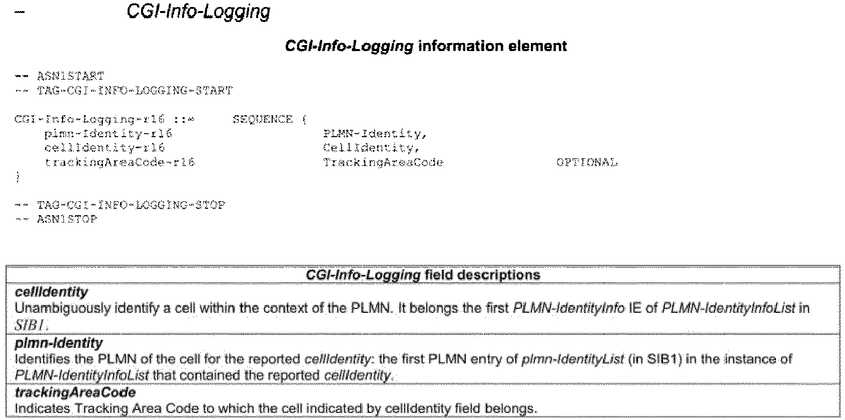

In step 7-45, the E-UTRA cell 5 of the UE in the RRC connected mode may be connected to the primary cell (PCell).

In step 7-50, the UE may receive a UE information request message including mobilityHistoryReportReq from the LTE base station. If *mobilityHistoryReportReq* is set to *true,* in step 7-55, the LTE may include the entry value included in VarMobilityHistoryReport in mobilityHistoryReport (include the *mobilityHistoryReport* and set it to include entries from *VarMobilityHistoryReport)*

In step 7-60, if necessary, the oldest entry value for the current cell (e.g., E-UTRA cell 5) may be deleted, and the global cell identifier for the current cell (E-UTRA cell 5) and the time spent in the E-UTRA cell 5 may be included in the entry in the VarMobilityHistoryReport.

In step 7-65, the LTE may include the above-described mobilityHistoryReport in the LTE information response message and transmit it to the LTE base station.

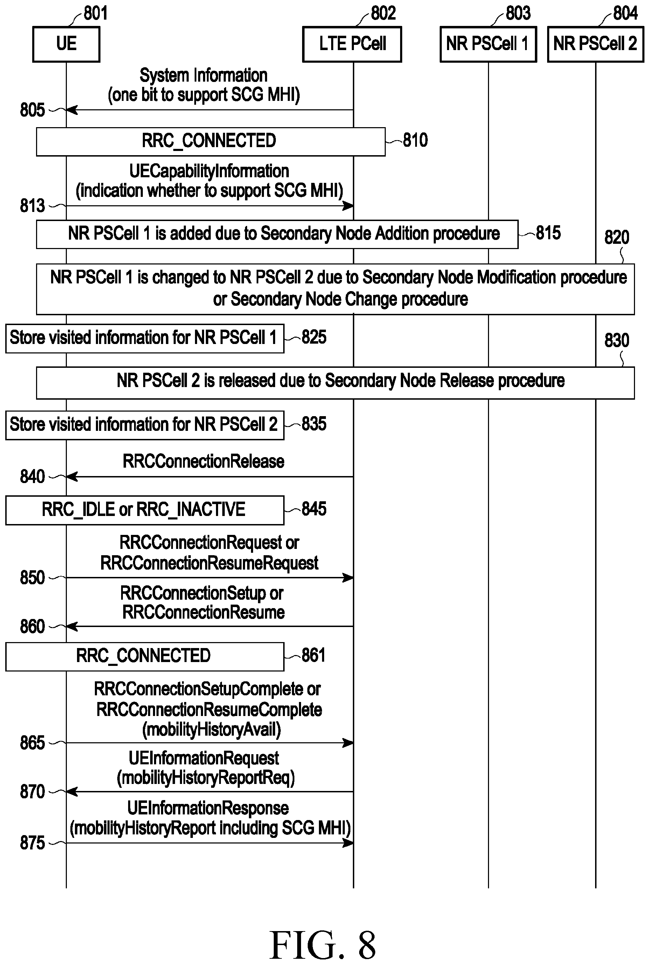

FIG. 8 is a view illustrating a UE operation in which a UE stores secondary cell group (SCG) mobility history information (hereinafter, `SCG MHI') and reports it to a base station in an LTE system according to an embodiment of the disclosure.

Referring to FIG. 8, the LTE base station 8-02 may broadcast system information (8-05). According to an embodiment of the disclosure, it is proposed that the base station or the LTE cell 8-02 broadcasts an indicator indicating that SCG MHI is supported in system information. If the indicator is broadcast in the system information, the UE 8-01 may store the SCG MHI in the VarMobilityHistoryReport when the PSCell is changed or when the PSCell is released.

In step 8-10, the UE 8-01 may be in the RRC connected mode RRC_CONNECTED by establishing an RRC connection with the LTE base station 8-02 (8-10).

In step 8-13, the UE 8-01 may transmit a UE capability information message (UECapabilityInformation) including an indicator that the SCG MHI may be stored to the LTE base station 8-02.

It is proposed that the UE according to an embodiment of the disclosure transmits UE capability information message (UECapabilityInformation) including the indicator that the SCG MHI may be stored when it has the capability of storing SCG MHI to the LTE base station.

Alternatively, even if the UE according to an embodiment of the disclosure has the capability to store the SCG MHI, as in the above-described embodiment, the LTE may not notify the LTE base station of the LTE capability information message (LTECapabilityInformation).

In step 8-15, the master node (MN) 8-02 may initiate the secondary node addition procedure to add the secondary node (SN) 8-03. The specific secondary node addition procedure may follow section TS 37.340 10.2. NR PSCell 1 8-03 may be added to the LTE 8-01 through step 8-15.

In step 8-20, for the UE 8-01, NR PSCell 1 8-03 may be changed to NR PSCell 2 8-04 through a secondary node modification procedure or a secondary node change procedure. The specific secondary node modification procedure or secondary node change procedure may follow section TS 37.340 10.3 or section TS 37.340 10.5.

In step 8-25, the UE 8-01 may store the SCG MHI for NR PSCell 1 in the VarMobilityHistoryReport. Specifically, the LTE may perform at least one of the following operations to store the SCG MHI in the VarMobilityHistoryReport.

### Operations:

- When the NR PSCell is changed (NR PSCell 1 → NR PSCell 2), if necessary, the oldest entry value is deleted, and the following may be included in the entry in the VarMobilityHistoryReport variable (include an entry in variable VarMobilityHistoryReport possibly after removing the oldest entry, if necessary, according to the following)

If there is the global cell identifier of the previous PSCell (NR PSCell 1), the global cell identifier of the previous PSCell may be stored in the visitedCellId field (if the global cell identity of the previous PSCell is available, include the global cell identity of previous PSCell in the field visitedCellId of the entry). Otherwise, the carrier frequency and physical cell identifier of the previous PSCell may be stored in the visitedCellId field (else, include the physical cell identity and carrier frequency of that cell in the field *visitedCellld* of the entry).

An indicator for indicating the PSCell may be included.

The time spent in the previous PSCell may be stored in the timeSpent field (set the field *timeSpent* of the entry as the time spent in the previous PSCell)

While spent in the previous PSCell, the global cell identifier of the PCell or the carrier frequency and physical cell identifier of the PCell may be included. In this case, there may be one or more global cell identifiers of the PCell or carrier frequency and physical cell identifiers of the PCell.

In step 8-30, the NR PSCell 2 8-04 configured for the UE 8-01 may be released through the secondary node release procedure. The specific secondary node release procedure or secondary node change procedure may follow section TS 37.340 10.4.

In step 8-35, the UE 8-01 may store the SCG MHI for NR PSCell 2 in the VarMobilityHistoryReport. Specifically, the LTE may perform at least one of the following operations to store the SCG MHI in the VarMobilityHistoryReport.

### Operations:

- When the NR PSCell is released (release of NR PSCell 2), if necessary, the oldest entry value is deleted, and the following may be included in the entry in the VarMobilityHistoryReport variable (include an entry in variable VarMobilityHistoryReport possibly after removing the oldest entry, if necessary, according to the following)

If there is the global cell identifier of the released PSCell (NR PSCell 2), the global cell identifier of the released PSCell may be stored in the visitedCellId field (if the global cell identity of the released PSCell is available, include the global cell identity of released PSCell in the field visitedCellId of the entry). Otherwise, the carrier frequency and physical cell identifier of the released PSCell may be stored in the visitedCellId field (else, include the physical cell identity and carrier frequency of that cell in the field *visitedCellld* of the entry).

An indicator for indicating the PSCell may be included.

The time spent in the released PSCell may be stored in the timeSpent field (set the field *timeSpent* of the entry as the time spent in the released PSCell)

The global cell identifier of the PCell set until the PSCell is released or the carrier frequency and physical cell identifier of the PCell may be included. In this case, there may be one or more global cell identifiers of the PCell or carrier frequency and physical cell identifiers of the PCell.

In step 8-40, the LTE base station 8-02 may transmit an RRC connection release message to the LTE 8-01. If the RRC connection release message includes rrc-InactiveConfig information, the UE in the RRC connected mode may transition (8-45) to the RRC inactive mode (RRC_INACTIVE). If the RRC connection release message does not include rrc-InactiveConfig information, the UE in the RRC connected mode may transition (8-45) to the RRC idle mode (RRC IDLE).

The RRC idle mode UE 8-01 may transmit an RRC connection request message (RRCConnectionRequest) to the base station 8-50 to perform an RRC connection setup procedure with the LTE base station 8-02. Upon receiving the RRC connection request message, the base station 8-02 may transmit (8-60) an RRC connection setup message (RRCConnectionSetup) to the UE 8-01 in response thereto. The UE receiving the RRC connection setup message may apply the RRC connection setup message and transition to the RRC connected mode (8-61). Then, the RRC connected mode UE may transmit an RRC connection setup complete message (RRCConnectionSetupComplete) to the base station (8-65). If the UE supports storage of mobility history information according to the above-described embodiment or supports SCG MHI, and mobility history information is present in the VarMobilityHistoryReport (If the UE supports storage of mobility history information or storage of SCG MHI and the UE has mobility history information available in VarMobilityHistoryReport), the UE may include the mobilityHistoryAvail indicator in the RRC connection setup complete message and transmit it to the base station (8-65).

The RRC inactive mode UE 8-01 may transmit an RRC connection resume request message (RRCConnectionResumeRequest) to the base station 8-50 to perform an RRC connection resume procedure with the LTE base station 8-02. Upon receiving the RRC connection resume request message, the base station 8-02 may transmit an RRC connection resume message (8-60) to the UE 8-01 in response thereto. The UE receiving the RRC connection resume message may apply the RRC connection resume message and transition to the RRC connected mode (8-61). Then, the RRC connected mode UE may transmit (8-65) an RRC connection resume complete message (RRCConnectionResumeComplete) to the base station. If the UE supports storage of mobility history information according to the above-described embodiment or supports SCG MHI, and mobility history information is present in the VarMobilityHistoryReport (If the UE supports storage of mobility history information or storage of SCG MHI and the UE has mobility history information available in VarMobilityHistoryReport), the UE may include the mobilityHistoryAvail indicator in the RRC connection resume complete message and transmit it to the base station (8-65).

In step 8-70, when security is successfully activated, the LTE base station 8-02 may perform a UE information procedure. That is, the base station 8-02 may transmit (8-70) a UE information request message (UEInformationRequest) to the UE 8-01 to request the conventional mobility history information or SCG MHI from the LTE 8-01. The LTE information request message may include a MobilityHistoryReportReq indicator.

When security is successfully activated in step 8-75, the UE 8-01 may transmit (8-75) a LTE information response message (UEInformationResponse) to the LTE base station 8-02. If mobilityHistoryReportReq is set to true in the received UE information request message, the UE may perform at least one of the following series of procedures.
- may include information in VarMobilityHistoryReport, in mobilityHistoryReport (include the *mobilityHistoryReport* and set it to include entries from *VarMobilityHistoryReport*) If the VarMobilitHistoryReport has an SCG MHI, the UE may include it in the mobilityHistoryReport. Or, when the SCG MHI is present in the VarMobilitHistoryReport only when the LTE base station 8-02 broadcasts the indicator indicating that the SCG MHI is supported in the system information, the LTE may include it in the mobilityHistoryReport.
- if necessary, the oldest information may be deleted, and information about the current PCell may be included in the mobilityHistoryReport as follows (include in the *mobilityHistoryReport* an entry for the current PCell, possibly after removing the oldest entry if required, set its fields as follows)
- may set the global cell identifier of the current PCell to visitedCellId (set *visitedCellld* to the global cell identity of the current PCell)
- may set the time spent in the current cell in the timeSpent field (set field *timeSpent* to the time spent in the current PCell)
- When the PSCell is set, if necessary, the oldest information may be deleted, and information about the current PSCell may be included in the mobilityHistoryReport as follows (include in the *mobilityHistoryReport* an entry for the current PSCell, possibly after removing the oldest entry if required, set its fields as follows)

The global cell identifier of the current PSCell or the carrier frequency and physical cell identifier of the PSCell may be set to visitedCellId visitedCellId (set *visitedCellld* to the global cell identity or carrier frequency and physical cell identity of the current PSCell)
- may set the time spent in the current cell in the timeSpent field (set field *timeSpent* to the time spent in the current PSCell)
- An indicator for indicating the PSCell may be included.
- The UE may perform the above-described procedures to include the mobilityHistoryReport in the UE information response message and transmit it to the base station (8-75).

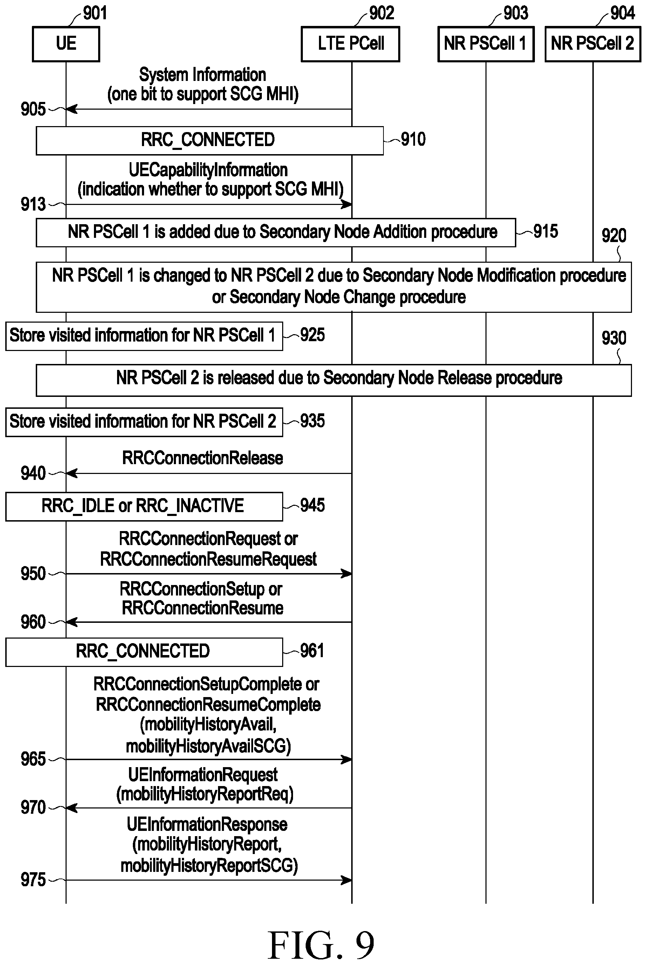

FIG. 9 is a view illustrating a UE operation in which a UE stores secondary cell group (SCG) mobility history information (hereinafter, `SCG MHI') and reports it to a base station in an LTE system according to an embodiment of the disclosure.

Referring to FIG. 9, the LTE base station 9-02 may broadcast system information (9-05). According to an embodiment of the disclosure, it is proposed that the base station or the LTE cell 9-02 broadcasts an indicator indicating that SCG MHI is supported in system information. If the indicator is broadcast in the system information, the UE 9-01 may store the SCG MHI in the VarMobilityHistoryReport when the PSCell is changed or when the PSCell is released.

In step 9-10, the UE 9-01 may be in the RRC connected mode RRC_CONNECTED by establishing an RRC connection with the LTE base station 9-02 (9-10).

In step 9-13, the UE 9-01 may transmit a UE capability information message (UECapabilityInformation) including an indicator that the SCG MHI may be stored to the LTE base station 9-02. It is proposed that the UE according to an embodiment of the disclosure transmits LTE capability information message (LTECapabilityInformation) including the indicator that the SCG MHI may be stored when it has the capability of storing SCG MHI to the LTE base station. Alternatively, even if the UE according to an embodiment of the disclosure has the capability to store the SCG MHI, as in the above-described embodiment, the LTE may not notify the LTE base station of the LTE capability information message (LTECapabilityInformation).

In step 9-15, the master node (MN) 9-02 may initiate the secondary node addition procedure to add the secondary node (SN) 9-03. The specific secondary node addition procedure may follow section TS 37.340 10.2. NR PSCell 1 9-03 may be added to the LTE 9-01 through step 9-15.

In step 9-20, for the UE 9-01, NR PSCell 1 9-03 may be changed to NR PSCell 2 9-04 through a secondary node modification procedure or a secondary node change procedure. The specific secondary node modification procedure or secondary node change procedure may follow section TS 37.340 10.3 or section TS 37.340 10.5.

In step 9-25, the UE 9-01 may store the SCG MHI for NR PSCell 1 in VarMobilityHistoryReportSCG which is a new variable. Specifically, the LTE may perform at least one of the following operations to store the SCG MHI in VarMobilityHistoryReportSCG.

### Operations:

- When the NR PSCell is changed (NR PSCell 1 → NR PSCell 2), if necessary, the oldest entry value is deleted, and the following may be included in the entry in the VarMobilityHistoryReportSCG variable (include an entry in variable VarMobilityHistoryReportSCG possibly after removing the oldest entry, if necessary, according to the following)

If there is the global cell identifier of the previous PSCell (NR PSCell 1), the global cell identifier of the previous PSCell may be stored in the visitedCellId field (if the global cell identity of the previous PSCell is available, include the global cell identity of previous PSCell in the field visitedCellId of the entry). Otherwise, the carrier frequency and physical cell identifier of the previous PSCell may be stored in the visitedCellId field (else, include the physical cell identity and carrier frequency of that cell in the field *visitedCellld* of the entry).

The time spent in the previous PSCell may be stored in the timeSpent field (set the field *timeSpent* of the entry as the time spent in the previous PSCell)

While spent in the previous PSCell, the global cell identifier of the PCell or the carrier frequency and physical cell identifier of the PCell may be included. In this case, there may be one or more global cell identifiers of the PCell or carrier frequency and physical cell identifiers of the PCell.

In step 9-30, the NR PSCell 2 9-04 configured for the UE 9-01 may be released through the secondary node release procedure. The specific secondary node release procedure or secondary node change procedure may follow section TS 37.340 10.4.

In step 9-35, the UE 9-01 may store the SCG MHI for NR PSCell 2 in the VarMobilityHistoryReport. Specifically, the LTE may perform at least one of the following operations to store the SCG MHI in VarMobilityHistoryReportSCG.

### Operations:

When the NR PSCell is released (release of NR PSCell 2), if necessary, the oldest entry value is deleted, and the following may be included in the entry in the VarMobilityHistoryReportSCG variable (include an entry in variable VarMobilityHistoryReportSCG possibly after removing the oldest entry, if necessary, according to the following)

If there is the global cell identifier of the released PSCell (NR PSCell 2), the global cell identifier of the released PSCell may be stored in the visitedCellId field (if the global cell identity of the released PSCell is available, include the global cell identity of released PSCell in the field visitedCellId of the entry). Otherwise, the carrier frequency and physical cell identifier of the released PSCell may be stored in the visitedCellId field (else, include the physical cell identity and carrier frequency of that cell in the field *visitedCellld* of the entry).

The time spent in the released PSCell may be stored in the timeSpent field (set the field *timeSpent* of the entry as the time spent in the released PSCell)

The global cell identifier of the PCell set until the PSCell is released or the carrier frequency and physical cell identifier of the PCell may be included. In this case, there may be one or more global cell identifiers of the PCell or carrier frequency and physical cell identifiers of the PCell.

In step 9-40, the LTE base station 9-02 may transmit an RRC connection release message to the LTE 9-01. If the RRC connection release message includes rrc-InactiveConfig information, the UE in the RRC connected mode may transition (9-45) to the RRC inactive mode (RRC_INACTIVE). If the RRC connection release message does not include rrc-InactiveConfig information, the UE in the RRC connected mode may transition (9-45) to the RRC idle mode (RRC IDLE).

The RRC idle mode UE 9-01 may transmit an RRC connection request message (RRCConnectionRequest) to the base station 9-50 to perform an RRC connection setup procedure with the LTE base station 9-02. Upon receiving the RRC connection request message, the base station 9-02 may transmit (9-60) an RRC connection setup message (RRCConnectionSetup) to the UE 9-01 in response thereto. The UE receiving the RRC connection setup message may apply the RRC connection setup message and transition to the RRC connected mode (9-61). Then, the RRC connected mode UE may transmit an RRC connection setup complete message (RRCConnectionSetupComplete) to the base station (9-65). If the UE supports storage of mobility history information in the above-described embodiment, and mobility history information is present in the VarMobilityHistoryReport (If the LTE supports storage of mobility history information and the UE has mobility history information available in VarMobilityHistoryReport), the UE may include the mobilityHistoryAvail indicator in the RRC connection setup complete message and transmit it to the base station (9-65). If the LTE supports storage of SCG MHI, and mobility history information is present in VarMobilityHistoryReportSCG (If the UE supports storage of SCG MHI and the UE has mobility history information available in VarMobilityHistoryReportSCG), the UE may include the mobilityHistoryAvailSCG indicator which is a new indicator in the RRC connection setup complete message and transmit (9-65) it to the base station. Or, if the LTE supports storage of SCG MHI, and mobility history information is present in VarMobilityHistoryReportSCG (If the UE supports storage of SCG MHI and the UE has mobility history information available in VarMobilityHistoryReportSCG), when the LTE base station 9-02 broadcasts an indicator indicating that SCG MHI is supported in the system information, the UE may include the mobilityHistoryAvailSCG which is a new indicator in the RRC connection setup complete message and transmit (9-65) it to the base station.

The RRC inactive mode UE 9-01 may transmit an RRC connection resume request message (RRCConnectionResumeRequest) to the base station 9-50 to perform an RRC connection resume procedure with the LTE base station 9-02. Upon receiving the RRC connection resume request message, the base station 9-02 may transmit an RRC connection resume message (9-60) to the UE 9-01 in response thereto. The UE receiving the RRC connection resume message may apply the RRC connection resume message and transition to the RRC connected mode (9-61). Then, the RRC connected mode UE may transmit (9-65) an RRC connection resume complete message (RRCConnectionResumeComplete) to the base station. If the UE supports storage of mobility history information in the above-described embodiment, and mobility history information is present in the VarMobilityHistoryReport (If the LTE supports storage of mobility history information and the UE has mobility history information available in VarMobilityHistoryReport), the UE may include the mobilityHistoryAvail indicator in the RRC connection resume complete message and transmit it to the base station (9-65). If the UE supports storage of SCG MHI, and mobility history information is present in VarMobilityHistoryReportSCG (If the UE supports storage of SCG MHI and the UE has mobility history information available in VarMobilityHistoryReportSCG), the UE may include the mobilityHistoryAvailSCG indicator which is a new indicator in the RRC connection resume complete message and transmit (9-65) it to the base station. Or, if the LTE supports storage of SCG MHI, and mobility history information is present in VarMobilityHistoryReportSCG (If the UE supports storage of SCG MHI and the UE has mobility history information available in VarMobilityHistoryReportSCG), when the LTE base station 9-02 broadcasts an indicator indicating that SCG MHI is supported in the system information, the UE may include the mobilityHistoryAvailSCG which is a new indicator in the RRC connection resume complete message and transmit (9-65) it to the base station.

In step 9-70, when security is successfully activated, the LTE base station 9-02 may perform a UE information procedure. That is, the base station 9-02 may transmit (9-70) a UE information request message (UEInformationRequest) to the UE 9-01 to request the conventional mobility history information or SCG MHI from the LTE 8-01. The LTE information request message may include a MobilityHistoryReportReq indicator.

When security is successfully activated in step 9-75, the UE 9-01 may transmit (9-75) a UE information response message (UEInformationResponse) to the LTE base station 9-02. If mobilityHistoryReportReq is set to true in the received UE information request message, the UE may perform at least one of the following series of procedures.
- may include information in VarMobilityHistoryReport, in mobilityHistoryReport (include the *mobilityHistoryReport* and set it to include entries from *VarMobilityHistoryReport*)
- if necessary, the oldest information may be deleted, and information about the current PCell may be included in the mobilityHistoryReport as follows (include in the *mobilityHistoryReport* an entry for the current PCell, possibly after removing the oldest entry if required, set its fields as follows)
- may set the global cell identifier of the current PCell to visitedCellId (set *visitedCellld* to the global cell identity of the current PCell)
- may set the time spent in the current cell in the timeSpent field (set field *timeSpent* to the time spent in the current PCell)
- If the VarMobilitHistoryReportSCG has an SCG MHI, the UE may include it in the mobilityHistoryReportSCG. Or, when the SCG MHI is present in the VarMobilitHistoryReportSCG only when the LTE base station 9-02 broadcasts the indicator indicating that the SCG MHI is supported in the system information, the UE may include it in the mobilityHistoryReportSCG.
- When the PSCell is set, if necessary, the oldest information may be deleted, and information about the current PSCell may be included in the mobilityHistoryReportSCG as follows (include in the *mobilityHistoryReportSCG* an entry for the current PSCell, possibly after removing the oldest entry if required, set its fields as follows)
- The global cell identifier of the current PSCell or the carrier frequency and physical cell identifier of the PSCell may be set to visitedCellId visitedCellId (set *visitedCellld* to the global cell identity or carrier frequency and physical cell identity of the current PSCell)
- may set the time spent in the current cell in the timeSpent field (set field *timeSpent* to the time spent in the current PSCell)

The UE may perform the above-described procedures to include the mobilityHistoryReport and/or mobilityHistoryReportSCG in the UE information response message and transmit it to the base station (9-75).

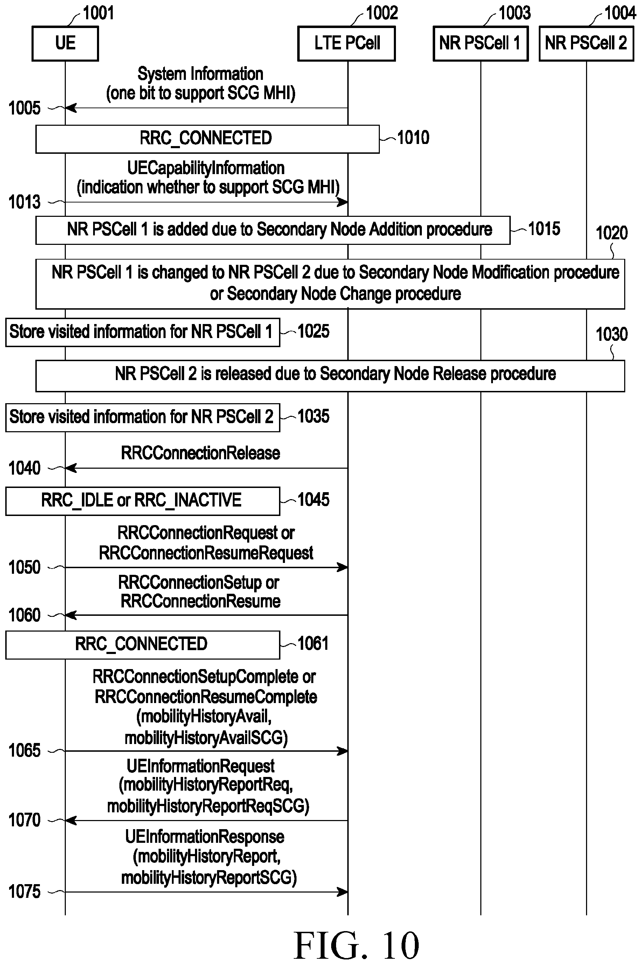

FIG. 10 is a view illustrating a UE operation in which a UE stores secondary cell group (SCG) mobility history information (hereinafter, `SCG MHI') and reports it to a base station in an LTE system according to an embodiment of the disclosure.

Referring to FIG. 10, the LTE base station 10-02 may broadcast system information (10-05). According to an embodiment of the disclosure, it is proposed that the base station or the LTE cell 10-02 broadcasts an indicator indicating that SCG MHI is supported in system information. If the indicator is broadcast in the system information, the UE 10-01 may store the SCG MHI in the VarMobilityHistoryReport when the PSCell is changed or when the PSCell is released.

In step 10-10, the UE 10-01 may be in the RRC connected mode RRC_CONNECTED by establishing an RRC connection with the LTE base station 10-02 (10-10).

In step 10-13, the UE 10-01 may transmit a UE capability information message (UECapabilityInformation) including an indicator that the SCG MHI may be stored to the LTE base station 10-02. It is proposed that the UE according to an embodiment of the disclosure transmits LTE capability information message (LTECapabilityInformation) including the indicator that the SCG MHI may be stored when it has the capability of storing SCG MHI to the LTE base station. Alternatively, even if the UE according to an embodiment of the disclosure has the capability to store the SCG MHI, as in the above-described embodiment, the LTE may not notify the LTE base station of the LTE capability information message (LTECapabilityInformation).

In step 10-15, the master node (MN) 10-02 may initiate the secondary node addition procedure to add the secondary node (SN) 10-03. The specific secondary node addition procedure may follow section TS 37.340 10.2. NR PSCell 1 10-03 may be added to the UE 10-01 through step 10-15.

In step 10-20, for the LTE 10-01, NR PSCell 1 10-03 may be changed to NR PSCell 2 10-04 through a secondary node modification procedure or a secondary node change procedure. The specific secondary node modification procedure or secondary node change procedure may follow section TS 37.340 10.3 or section TS 37.340 10.5.

In step 10-25, the UE 10-01 may store the SCG MHI for NR PSCell 1 in VarMobilityHistoryReportSCG which is a new variable. Specifically, the LTE may perform at least one of the following operations to store the SCG MHI in VarMobilityHistoryReportSCG.

### Operations:

- When the NR PSCell is changed (NR PSCell 1 → NR PSCell 2), if necessary, the oldest entry value is deleted, and the following may be included in the entry in the VarMobilityHistoryReportSCG variable (include an entry in variable VarMobilityHistoryReportSCG possibly after removing the oldest entry, if necessary, according to the following)

If there is the global cell identifier of the previous PSCell (NR PSCell 1), the global cell identifier of the previous PSCell may be stored in the visitedCellId field (if the global cell identity of the previous PSCell is available, include the global cell identity of previous PSCell in the field visitedCellId of the entry). Otherwise, the carrier frequency and physical cell identifier of the previous PSCell may be stored in the visitedCellId field (else, include the physical cell identity and carrier frequency of that cell in the field *visitedCellld* of the entry).

The time spent in the previous PSCell may be stored in the timeSpent field (set the field *timeSpent* of the entry as the time spent in the previous PSCell)

While spent in the previous PSCell, the global cell identifier of the PCell or the carrier frequency and physical cell identifier of the PCell may be included. In this case, there may be one or more global cell identifiers of the PCell or carrier frequency and physical cell identifiers of the PCell.

In step 10-30, the NR PSCell 2 10-04 configured for the UE 10-01 may be released through the secondary node release procedure. The specific secondary node release procedure or secondary node change procedure may follow section TS 37.340 10.4.

In step 10-35, the UE 10-01 may store the SCG MHI for NR PSCell 2 in the VarMobilityHistoryReport. Specifically, the LTE may perform at least one of the following operations to store the SCG MHI in VarMobilityHistoryReportSCG.

### Operations:

- When the NR PSCell is released (release of NR PSCell 2), if necessary, the oldest entry value is deleted, and the following may be included in the entry in the VarMobilityHistoryReportSCG variable (include an entry in variable VarMobilityHistoryReportSCG possibly after removing the oldest entry, if necessary, according to the following)

If there is the global cell identifier of the released PSCell (NR PSCell 2), the global cell identifier of the released PSCell may be stored in the visitedCellId field (if the global cell identity of the released PSCell is available, include the global cell identity of released PSCell in the field visitedCellId of the entry). Otherwise, the carrier frequency and physical cell identifier of the released PSCell may be stored in the visitedCellId field (else, include the physical cell identity and carrier frequency of that cell in the field *visitedCellld* of the entry).

The time spent in the released PSCell may be stored in the timeSpent field (set the field *timeSpent* of the entry as the time spent in the released PSCell)

The global cell identifier of the PCell set until the PSCell is released or the carrier frequency and physical cell identifier of the PCell may be included. In this case, there may be one or more global cell identifiers of the PCell or carrier frequency and physical cell identifiers of the PCell.

In step 10-40, the LTE base station 10-02 may transmit an RRC connection release message to the UE 10-01. If the RRC connection release message includes rrc-InactiveConfig information, the UE in the RRC connected mode may transition (10-45) to the RRC inactive mode (RRC_INACTIVE). If the RRC connection release message does not include rrc-InactiveConfig information, the LTE in the RRC connected mode may transition (10-45) to the RRC idle mode (RRC_IDLE).

The RRC idle mode UE 10-01 may transmit an RRC connection request message (RRCConnectionRequest) to the base station 10-50 to perform an RRC connection setup procedure with the LTE base station 10-02. Upon receiving the RRC connection request message, the base station 10-02 may transmit (10-60) an RRC connection setup message (RRCConnectionSetup) to the UE 10-01 in response thereto. The UE receiving the RRC connection setup message may apply the RRC connection setup message and transition to the RRC connected mode (10-61). Then, the RRC connected mode UE may transmit an RRC connection setup complete message (RRCConnectionSetupComplete) to the base station (10-65). If the UE supports storage of mobility history information in the above-described embodiment, and mobility history information is present in the VarMobilityHistoryReport (If the LTE supports storage of mobility history information and the UE has mobility history information available in VarMobilityHistoryReport), the UE may include the mobilityHistoryAvail indicator in the RRC connection setup complete message and transmit it to the base station (10-65). If the LTE supports storage of SCG MHI, and mobility history information is present in VarMobilityHistoryReportSCG (If the UE supports storage of SCG MHI and the UE has mobility history information available in VarMobilityHistoryReportSCG), the UE may include the mobilityHistoryAvailSCG indicator which is a new indicator in the RRC connection setup complete message and transmit (10-65) it to the base station. Or, if the LTE supports storage of SCG MHI, and mobility history information is present in VarMobilityHistoryReportSCG (If the UE supports storage of SCG MHI and the UE has mobility history information available in VarMobilityHistoryReportSCG), when the LTE base station 10-02 broadcasts an indicator indicating that SCG MHI is supported in the system information, the UE may include the mobilityHistoryAvailSCG which is a new indicator in the RRC connection setup complete message and transmit (10-65) it to the base station.

The RRC inactive mode UE 10-01 may transmit an RRC connection resume request message (RRCConnectionResumeRequest) to the base station 10-50 to perform an RRC connection resume procedure with the LTE base station 10-02. Upon receiving the RRC connection resume request message, the base station 10-02 may transmit an RRC connection resume message (10-60) to the UE 10-01 in response thereto. The UE receiving the RRC connection resume message may apply the RRC connection resume message and transition to the RRC connected mode (10-61). Then, the RRC connected mode UE may transmit (10-65) an RRC connection resume complete message (RRCConnectionResumeComplete) to the base station. If the UE supports storage of mobility history information in the above-described embodiment, and mobility history information is present in the VarMobilityHistoryReport (If the LTE supports storage of mobility history information and the LTE has mobility history information available in VarMobilityHistoryReport), the LTE may include the mobilityHistoryAvail indicator in the RRC connection resume complete message and transmit it to the base station (10-65). If the UE supports storage of SCG MHI, and mobility history information is present in VarMobilityHistoryReportSCG (If the UE supports storage of SCG MHI and the UE has mobility history information available in VarMobilityHistoryReportSCG), the UE may include the mobilityHistoryAvailSCG indicator which is a new indicator in the RRC connection resume complete message and transmit (10-65) it to the base station. Or, if the LTE supports storage of SCG MHI, and mobility history information is present in VarMobilityHistoryReportSCG (If the UE supports storage of SCG MHI and the UE has mobility history information available in VarMobilityHistoryReportSCG), when the LTE base station 10-02 broadcasts an indicator indicating that SCG MHI is supported in the system information, the UE may include the mobilityHistoryAvailSCG which is a new indicator in the RRC connection resume complete message and transmit (10-65) it to the base station.

In step 10-70, when security is successfully activated, the LTE base station 10-02 may perform a UE information procedure. That is, the base station 10-02 may transmit (10-70) a UE information request message (UEInformationRequest) to the UE 10-01 to request the conventional mobility history information or SCG MHI from the LTE 8-01. The LTE information request message may include a MobilityHistoryReportReq indicator to report conventional mobility history information and/or a new MobilityHistoryReportReqSCG indicator to report SCG MHI.

When security is successfully activated in step 10-75, the UE 10-01 may transmit (10-75) a LTE information response message (UEInformationResponse) to the LTE base station 10-02. If mobilityHistoryReportReq is set to true in the received UE information request message, the UE may perform at least one of the following series of procedures.
- may include information in VarMobilityHistoryReport, in mobilityHistoryReport (include the *mobilityHistoryReport* and set it to include entries from *VarMobilityHistoryReport*)
- if necessary, the oldest information may be deleted, and information about the current PCell may be included in the mobilityHistoryReport as follows (include in the *mobilityHistoryReport* an entry for the current PCell, possibly after removing the oldest entry if required, set its fields as follows)
- may set the global cell identifier of the current PCell to visitedCellId (set *visitedCellld* to the global cell identity of the current PCell)
- may set the time spent in the current cell in the timeSpent field (set field *timeSpent* to the time spent in the current PCell)

If mobilityHistoryReportReqSCG is set to true in the received LTE information request message, the UE may perform at least one of the following series of procedures.
- If the VarMobilitHistoryReportSCG has an SCG MHI, the UE may include it in the mobilityHistoryReportSCG. Or, when the SCG MHI is present in the VarMobilitHistoryReportSCG only when the LTE base station 10-02 broadcasts the indicator indicating that the SCG MHI is supported in the system information, the UE may include it in the mobilityHistoryReportSCG.
- When the PSCell is set, if necessary, the oldest information may be deleted, and information about the current PSCell may be included in the mobilityHistoryReportSCG as follows (include in the *mobilityHistoryReportSCG* an entry for the current PSCell, possibly after removing the oldest entry if required, set its fields as follows)
- The global cell identifier of the current PSCell or the carrier frequency and physical cell identifier of the PSCell may be set to visitedCellId visitedCellId (set *visitedCellld* to the global cell identity or carrier frequency and physical cell identity of the current PSCell)
- may set the time spent in the current cell in the timeSpent field (set field *timeSpent* to the time spent in the current PSCell)

The UE may perform the above-described procedures to include the mobilityHistoryReport and/or mobilityHistoryReportSCG in the UE information response message and transmit it to the base station (10-75).

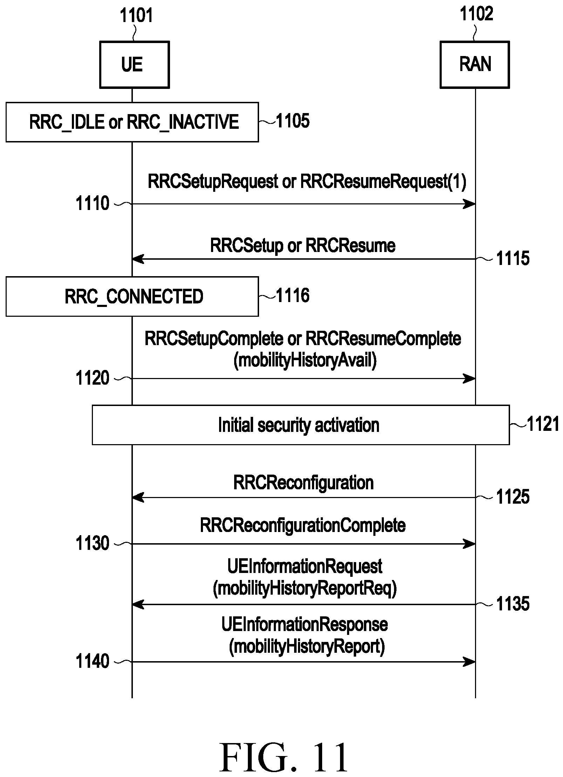

FIG. 11 is a view illustrating a UE operation in which a UE reports secondary cell group (SCG) mobility history information (hereinafter, `SCG MHI') to a base station in an LTE system according to an embodiment of the disclosure.

Referring to FIG. 11, the LTE base station 11-02 may broadcast system information (11-05). According to an embodiment of the disclosure, it is proposed that the base station or the LTE cell 11-02 broadcasts an indicator indicating that SCG MHI is supported in system information. If the indicator is broadcast in the system information, the UE 11-01 may store the SCG MHI in the VarMobilityHistoryReport when the PSCell is changed or when the PSCell is released.

In step 11-10, the UE 11-01 may be in the RRC connected mode RRC_CONNECTED by establishing an RRC connection with the LTE base station 11-02 (11-10).

In step 11-13, the UE 11-01 may transmit a UE capability information message (UECapabilityInformation) including an indicator that the SCG MHI may be stored to the LTE base station 11-02. It is proposed that the UE according to an embodiment of the disclosure transmits LTE capability information message (LTECapabilityInformation) including the indicator that the SCG MHI may be stored when it has the capability of storing SCG MHI to the LTE base station.

In step 11-15, the LTE base station 11-02 may configure the LTE 11-01 to report the mobilityHistoryAvailSCG indicator or the mobilityHistoryReportSCG by using predetermined configuration information. For example, the predetermined configuration information may mean the otherConfig field.

In step 11-20, the LTE 11-01 may include a mobilityHistoryAvailSCG indicator in a predetermined RRC message and may transmit it to the LTE base station 11-02. The predetermined RRC message may mean, e.g., one of an RRC connection resume complete message (RRCConnectionResumeComplete), an RRC connection reconfiguration complete message (RRCConnectionReconfigurationComplete), and an RRC connection reestablishment complete message (RRCConnectionReestablishmentComplete).

In step 11-25, the LTE base station 11-02 may include mobilityHistoryReportSCG in the UE information request message (UEInformationRequest) and transmit it to the UE 11-01.

In step 11-30, the UE 11-01 may include mobilityHistoryReportSCG in the UE information response message (UEInformationResponse) and transmit it. In other words, in step 11-25, if mobilityHistoryReportReqSCG is set to true in the received UE information request message, the UE may perform at least one of the following series of procedures.
- If the VarMobilitHistoryReportSCG has an SCG MHI, the UE may include it in the mobilityHistoryReportSCG.
- When the PSCell is set, if necessary, the oldest information may be deleted, and information about the current PSCell may be included in the mobilityHistoryReportSCG as follows (include in the *mobilityHistoryReportSCG* an entry for the current PSCell, possibly after removing the oldest entry if required, set its fields as follows)
- The global cell identifier of the current PSCell or the carrier frequency and physical cell identifier of the PSCell may be set to visitedCellId visitedCellId (set *visitedCellld* to the global cell identity or carrier frequency and physical cell identity of the current PSCell)
- may set the time spent in the current cell in the timeSpent field (set field *timeSpent* to the time spent in the current PSCell)

Alternatively, in step 11-35, the LTE base station 11-02 may transmit a predetermined RRC message including mobilityHistoryReportSCG to the UE 11-01. The predetermined RRC message may mean, e.g., one of an RRC connection resume message (RRCConnectionResume), an RRC connection reconfiguration message (RRCConnectionReconfiguration), and an RRC connection reestablishment message (RRCConnectionReestablishment).

In step 11-40, a predetermined RRC message including mobilityHistoryReportSCG may be transmitted to the UE 11-01. The predetermined RRC message may mean, e.g., one of an RRC connection resume complete message (RRCConnectionResumeComplete), an RRC connection reconfiguration complete message (RRCConnectionReconfigurationComplete), and an RRC connection reestablishment complete message (RRCConnectionReestablishmentComplete). In other words, if mobilityHistoryReportReqSCG is set to true in the RRC message received in step 11-35, the UE may perform the above-described procedure to include mobilityHistoryReportReq in the RRC message in an RRC message responsive to the RRC message received In step 11-35 and transmit it.

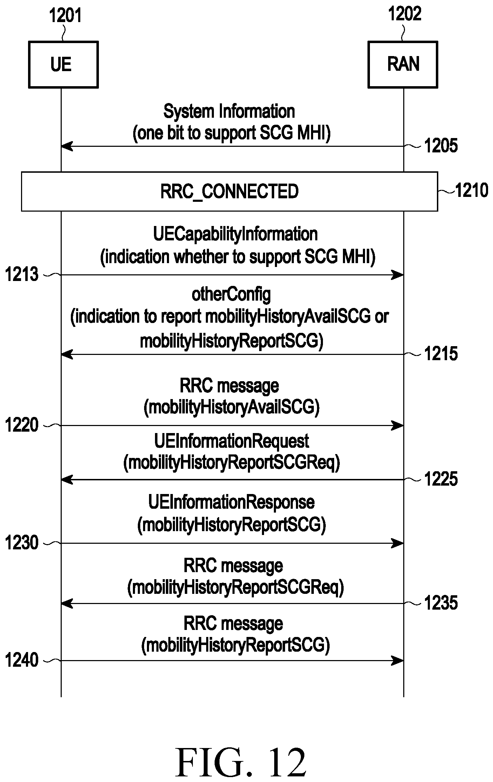

FIG. 12 is a flowchart illustrating a process in which a LTE reports mobility history information to an NR base station in an NR system.

Referring to FIG. 12, the UE 12-01 may be in the RRC idle mode (RRC_IDLE) or the RRC inactive mode (RRC_INACTIVE).

The RRC idle mode UE 12-01 may transmit an RRC connection request message (RRCSetupRequest) to the base station 12-10 to perform an RRC connection setup procedure with the base station 12-02. Upon receiving the RRC connection request message, the base station 12-02 may transmit (12-15) an RRC connection setup message (RRCSetup) to the UE 12-01 in response thereto. The UE receiving the RRC connection setup message may apply the RRC connection setup message and transition to the RRC connected mode (12-16). Then, the RRC connected mode UE may transmit an RRC connection setup complete message (RRCSetupComplete) to the base station (12-20). If the LTE supports storage of mobility history information, and mobility history information is present in the VarMobilityHistoryReport (If the LTE supports storage of mobility history information and the LTE has mobility history information available in VarMobilityHistoryReport), the LTE may include the mobilityHistoryAvail indicator in the RRC connection setup complete message and transmit it to the base station (12-20).

The RRC inactive mode LTE 12-01 may transmit (120-10) an RRC connection resume request message (RRCResumeRequest) or RRC connection resume request 1 message (RRCResumeRequest1) to the base station to perform an RRC connection resume procedure with the base station 12-02. Upon receiving the RRC connection resume request message, the base station 12-02 may transmit (12-15) an RRC connection resume message (RRCResume) to the UE 12-01 in response thereto. The UE receiving the RRC connection resume message may apply the RRC connection resume message and transition to the RRC connected mode (12-16). Then, the RRC connected mode UE may transmit (12-20) an RRC connection resume complete message (RRCResumeComplete) to the base station. If the LTE supports storage of mobility history information, and mobility history information is present in the VarMobilityHistoryReport (If the LTE supports storage of mobility history information and the LTE has mobility history information available in VarMobilityHistoryReport), the UE may include the mobilityHistoryAvail indicator in the RRC connection resume complete message and transmit it to the base station (12-20).

The UE 12-01 that has not configured security may perform an initial security activation procedure with the base station 12-02 (12-21). For example, the LTE that does not configure security may refer to a UE that has switched from the RRC idle mode to the RRC connected mode. Specifically, the UE 12-01 may transmit a security mode command message (SecurityModeCommand) to the base station 12-02, and in response thereto, the base station may transmit a security mode completion message (SecurityModeComplete) to the UE.

In order to perform the RRC connection reconfiguration procedure in step 12-25, the base station 12-02 may transmit an RRC connection reconfiguration message (RRCReconfiguration) to the RRC connected mode UE 12-01. The UE may apply the received RRC connection reconfiguration message and may transmit (12-30) an RRC connection reconfiguration complete message (RRCnReconfigurationComplete) to the base station in response thereto.

In step 12-35, the base station 12-02 may perform a UE information procedure when security activation is successfully performed. The base station 12-02 may transmit (12-35) a LTE information request message (UEInformationRequest) to the LTE to request mobility history information from the UE 12-01. The UE information request message may include a MobilityHistoryReportReq indicator.

In step 12-40, the LTE 12-01 that successfully performs security activation may transmit (12-40) a LTE information response (UEInformationResponse) to the base station 12-02. If mobilityHistoryReportReq is set to true in the received UE information request message, the UE may perform the following series of procedures.
- may include information in VarMobilityHistoryReport, in mobilityHistoryReport (include the *mobilityHistoryReport* and set it to include entries from *VarMobilityHistoryReport*)
- if necessary, the oldest information may be deleted, and information about the current cell may be included in the mobilityHistoryReport as follows (include in the *mobilityHistoryReport* an entry for the current cell, possibly after removing the oldest entry if required, set its fields as follows)
- may set the global cell identifier of the current cell to visitedCellId (set *visitedCellld* to the global cell identity of the current cell)
- may set the time spent in the current cell in the timeSpent field (set field *timeSpent* to the time spent in the current cell)

The UE may perform the above-described procedures to include the mobilityHistoryReport in the UE information response message and transmit it to the base station (12-40).

The LTE according to the NR system has the following characteristics in storing mobility history information and reporting it to the NR base station.
- The UE does not transmit a separate UE capability information message (UECapabilityInformation) to the base station to let the UE know whether it is supported to store the mobility history information. Instead, the UE transmits an RRC connection setup complete message or RRC connection resume complete message including the mobilityHistoryAvail indicator only when storing of mobility history information is supported, and the mobility history information is present in VarMobilityHistoryReport.
- The LTE does not store information about the PSCell which it has accessed or camped on in the mobility history information.
- The UE stores only the cell information list for staying in the RRC idle mode or the RRC inactive mode, the time information for staying in each cell, the cell information list for staying in the RRC connected mode, and the time information for staying in each cell in the mobility history information and reports the information to the base station.

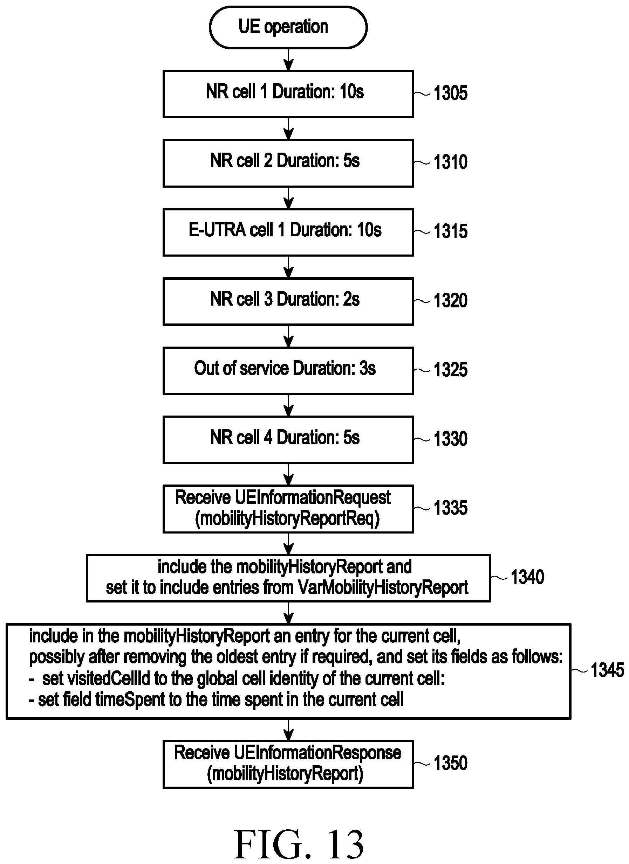

FIG. 13 is a view illustrating a LTE operation in which a LTE stores mobility history information and reports it to a base station in an NR system.

A UE supporting to store mobility history information may have the (suitable) serving cell changed in the RRC idle mode (RRC_IDLE) or RRC inactive mode (RRC_INACTIVE) or have the PCell changed in the RRC connected mode (RRC_CONNECTED) or may enter out of service (e.g., when it camps on or accesses no cell, which may mean any cell selection state). The UE according to an embodiment of the disclosure may store the mobility history information in the VarMobilityHistoryReport by performing an operation according to the following conditions.
- Condition 1: When the cell constituted of the LTE PCell or NR PCell in the RRC connected mode or the serving cell (NR cell) in RRC_INACTIVE or the serving cell (NR cell or E-UTRA cell) in RRC_IDLE is changed (i.e., when it is changed to another NR cell or changed to E-UTRA cell) or when entering from the camped normally state in NR or LTE to any cell selection state (upon change of suitable cell, consisting of PCell in RRC_CONNECTED (for NR cell or E-UTRA cell) or serving cell in RRC_INACTIVE (for NR cell) or in RRC_IDLE (for NR or E-UTRA cell), to another NR or E-UTRA cell or when entering any cell selection state from camped normally state in NR or LTE

### Operation 1: If condition 1 is met

If necessary, the oldest entry value is deleted, and the following may be included in the entry in the VarMobilityHistoryReport variable (include an entry in variable VarMobilityHistoryReport possibly after removing the oldest entry, if necessary, according to the following)

If there is the global cell identifier of the previous PCell or serving cell, the global cell identifier of the previous PCell or serving cell may be stored in the visitedCellId field (if the global cell identity of the previous PCell/ serving cell is available, include the global cell identity of that cell in the field *visitedCellld* of the entry). Otherwise, the carrier frequency and physical cell identifier of the previous PCell or serving cell may be stored in the visitedCellId field (else, include the physical cell identity and carrier frequency of that cell in the field *visitedCellld* of the entry). The time spent in the previous PCell or serving cell may be stored in the timeSpent field (set the field *timeSpent* of the entry as the time spent in the previous PCell/ serving cell)
- Condition 2-1: Previously out of service and using another RAT (i.e., an RAT other than E-UTRA), and then enters E-UTRA in RRC_CONNECTED or RRC_IDLE. Or, previously out of service or using another RAT, and then enters E-UTRA (upon entering E-UTRA (in RRC_CONNECTED or RRC_IDLE) while previously out of service and/ or using another RAT)
- Condition 2: Previously in any cell selection state in LTE or NR, and/or in the camped on any cell state in NR or LTE, and then enters camped normally state to E-UTRA in RRC_CONNECTED or RRC_IDLE or RRC_INACTIVE (upon entering camped normally state in NR (in RRC_CONNECTED, RRC_IDLE, RRC_INACTIVE) while previously in 'any cell selection' state or 'camped on any cell' state in NR or LTE)

### Operation 2: If condition 2 is met,

If necessary, the oldest entry value is deleted, and the following may be included in the entry in the VarMobilityHistoryReport variable (include an entry in variable VarMobilityHistoryReport possibly after removing the oldest entry, if necessary, according to the following)

In NR or LTE, the time spent in any cell selection state and/or camped on any cell state may be stored in the timeSpent field (set the field timeSpent of the entry as the time spent in 'any cell selection' state and/or 'camped on any cell' state in NR or LTE)

Referring to FIG. 13, the UE may store the mobility history information in the VarMobilityHistoryReport according to the above-described method from steps 13-05 to 13-30. For example, the LTE may store at least one of the following information in VarMobility Hi story Report.
- Global cell identifier or carrier frequency and physical cell identifier for NR cell 1, and time 10s spent in NR cell 1 (13-05)
- Global cell identifier or carrier frequency and physical cell identifier for NR cell 2, and time 5s spent in NR cell 2 (13-10)
- Global cell identifier or carrier frequency and physical cell identifier for E-UTRA cell 1, and time 10s spent in E-UTRA cell 1 (13-15)
- Global cell identifier or carrier frequency and physical cell identifier for NR cell 3, and time 2s spent in E-UTRA cell 3 (13-20)
- Time 3s spent out of service (13-25)

For reference, the global cell identifier for the NR cell may mean the following.

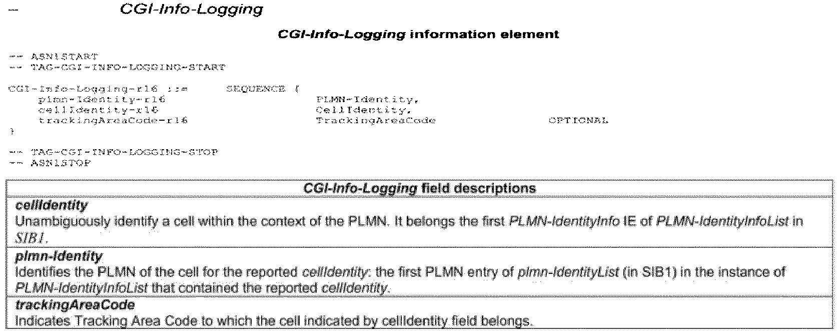

For reference, the global cell identifier for the E-UTRA cell may mean either cellGlobalIdEUTRA or CGI-InfoEUTRALogging.

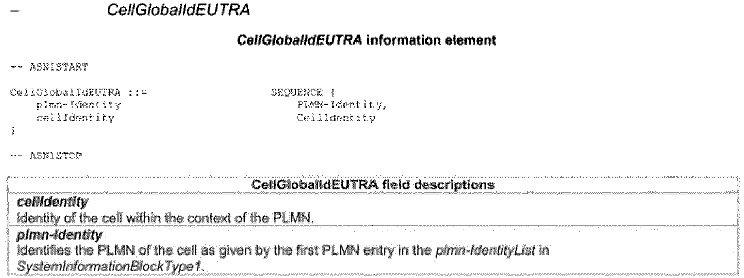

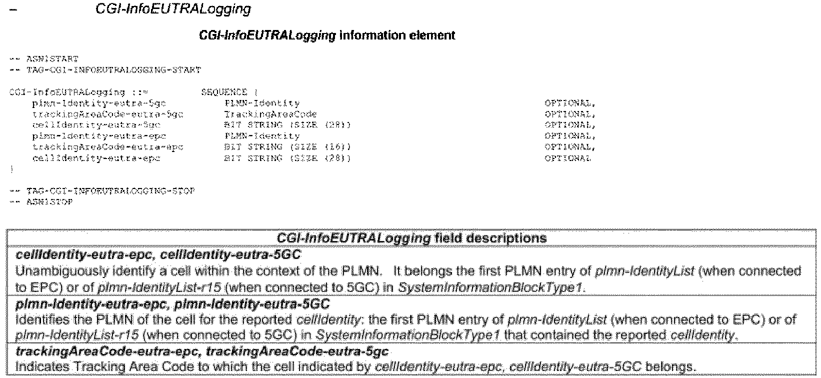

In step 13-30, the NR cell 4 of the UE in the RRC connected mode may be connected to the primary cell (PCell).

In step 13-35, the UE may receive a UE information request message including mobilityHistoryReportReq from the NR base station. If *mobilityHistoryReportReq* is set to *true,* in step 13-40, the LTE may include the entry value included in VarMobilityHistoryReport in mobilityHistoryReport (include the *mobilityHistoryReport* and set it to include entries from *VarMobilityHistoryReport)*

In step 13-45, if necessary, the oldest entry value for the current cell (e.g., NR cell 4) may be deleted, and the global cell identifier for the current cell (NR cell 4) and the time spent in the NR cell 4 may be included in the entry in the VarMobilityHistoryReport.

In step 13-50, the LTE may include the above-described mobilityHistoryReport in the LTE information response message and transmit it to the NR base station.

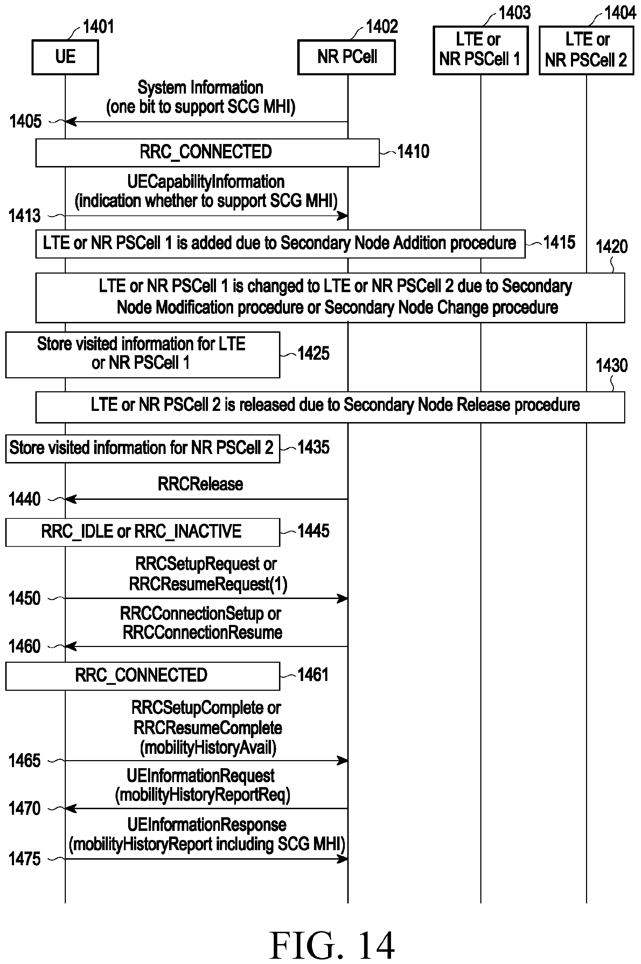

FIG. 14 is a view illustrating a UE operation in which a UE stores secondary cell group (SCG) mobility history information (hereinafter, `SCG MHI') and reports it to a base station in an NR system according to an embodiment of the disclosure.

Referring to FIG. 14, the NR base station 14-02 may broadcast system information (14-05). According to an embodiment of the disclosure, it is proposed that the base station or the NR cell 14-02 broadcasts an indicator indicating that SCG MHI is supported in system information. If the indicator is broadcast in the system information, the UE 14-01 may store the SCG MHI in the VarMobilityHistoryReport when the PSCell is changed or when the PSCell is released.

In step 14-10, the UE 14-01 may be in the RRC connected mode RRC_CONNECTED by establishing an RRC connection with the NR base station 14-02 (14-10).

In step 14-13, the UE 14-01 may transmit a UE capability information message (UECapabilityInformation) including an indicator that the SCG MHI may be stored to the NR base station 14-02. It is proposed that the UE according to an embodiment of the disclosure transmits LTE capability information message (LTECapabilityInformation) including the indicator that the SCG MHI may be stored when it has the capability of storing SCG MHI to the NR base station. Alternatively, even if the UE according to an embodiment of the disclosure has the capability to store the SCG MHI, as in the above-described embodiment, the LTE may not notify the NR base station of the UE capability information message (UECapabilityInformation).

In step 14-15, the master node (MN) 14-02 may initiate the secondary node addition procedure to add the secondary node (SN) 14-03. The specific secondary node addition procedure may follow section TS 37.340 10.2. LTE or NR PSCell 1 14-03 may be added to the UE 14-01 through step 14-15.

In step 14-20, for the LTE 14-01, LTE or NR PSCell 1 14-03 may be changed to LTE or NR PSCell 2 14-04 through a secondary node modification procedure or a secondary node change procedure. The specific secondary node modification procedure or secondary node change procedure may follow section TS 37.340 10.3 or section TS 37.340 10.5.

In step 14-25, the UE 14-01 may store the SCG MHI for LTE or NR PSCell 1 in the VarMobilityHistoryReport. Specifically, the LTE may perform at least one of the following operations to store the SCG MHI in the VarMobilityHistoryReport.

### Operations:

- When the LTE or NR PSCell is changed (LTE or NR PSCell 1 → LTE or NR PSCell 2), if necessary, the oldest entry value is deleted, and the following may be included in the entry in the VarMobilityHistoryReport variable (include an entry in variable VarMobilityHistoryReport possibly after removing the oldest entry, if necessary, according to the following)

If there is the global cell identifier of the previous PSCell (LTE or NR PSCell 1), the global cell identifier of the previous PSCell may be stored in the visitedCellId field (if the global cell identity of the previous PSCell is available, include the global cell identity of previous PSCell in the field visitedCellId of the entry). Otherwise, the carrier frequency and physical cell identifier of the previous PSCell may be stored in the visitedCellId field (else, include the physical cell identity and carrier frequency of that cell in the field *visitedCellld* of the entry).

An indicator for indicating the PSCell may be included.

The time spent in the previous PSCell may be stored in the timeSpent field (set the field *timeSpent* of the entry as the time spent in the previous PSCell)

While spent in the previous PSCell, the global cell identifier of the PCell or the carrier frequency and physical cell identifier of the PCell may be included. In this case, there may be one or more global cell identifiers of the PCell or carrier frequency and physical cell identifiers of the PCell.

In step 14-30, the LTE or NR PSCell 2 14-04 configured for the UE 14-01 may be released through the secondary node release procedure. The specific secondary node release procedure or secondary node change procedure may follow section TS 37.340 10.4.

In step 14-35, the UE 14-01 may store the SCG MHI for LTE or NR PSCell 2 in the VarMobilityHistoryReport. Specifically, the LTE may perform at least one of the following operations to store the SCG MHI in the VarMobilityHistoryReport.

### Operations:

- When the LTE or NR PSCell is released (release of LTE or NR PSCell 2), if necessary, the oldest entry value is deleted, and the following may be included in the entry in the VarMobilityHistoryReport variable (include an entry in variable VarMobilityHistoryReport possibly after removing the oldest entry, if necessary, according to the following)

If there is the global cell identifier of the released PSCell (LTE or NR PSCell 2), the global cell identifier of the released PSCell may be stored in the visitedCellId field (if the global cell identity of the released PSCell is available, include the global cell identity of released PSCell in the field visitedCellId of the entry). Otherwise, the carrier frequency and physical cell identifier of the released PSCell may be stored in the visitedCellId field (else, include the physical cell identity and carrier frequency of that cell in the field *visitedCellld* of the entry).

An indicator for indicating the PSCell may be included.

The time spent in the released PSCell may be stored in the timeSpent field (set the field *timeSpent* of the entry as the time spent in the released PSCell)

The global cell identifier of the PCell set until the PSCell is released or the carrier frequency and physical cell identifier of the PCell may be included. In this case, there may be one or more global cell identifiers of the PCell or carrier frequency and physical cell identifiers of the PCell.

In step 14-40, the NR base station 14-02 may transmit an RRC connection release message to the LTE 14-01. If the RRC connection release message includes suspendConfig information, the UE in the RRC connected mode may transition (14-45) to the RRC inactive mode (RRC_INACTIVE). If the RRC connection release message does not include suspendConfig information, the UE in the RRC connected mode may transition (14-45) to the RRC idle mode (RRC_IDLE).

The RRC idle mode UE 14-01 may transmit an RRC connection request message (RRCSetupRequest) to the base station to perform an RRC connection setup procedure with the NR base station 14-02. Upon receiving the RRC connection request message, the base station 14-02 may transmit (14-60) an RRC connection setup message (RRCSetup) to the UE 14-01 in response thereto. The UE receiving the RRC connection setup message may apply the RRC connection setup message and transition to the RRC connected mode (14-61). Then, the RRC connected mode UE may transmit an RRC connection setup complete message (RRCCSetupComplete) to the base station (14-65). If the LTE supports storage of mobility history information according to the above-described embodiment or supports SCG MHI, and mobility history information is present in the VarMobilityHistoryReport (If the LTE supports storage of mobility history information or storage of SCG MHI and the LTE has mobility history information available in VarMobilityHistoryReport), the UE may include the mobilityHistoryAvail indicator in the RRC connection setup complete message and transmit it to the base station (14-65).

The RRC inactive mode LTE 14-01 may transmit (14-50) an RRC connection resume request message (RRCResumeRequest) or RRC connection resume request 1 message (RRCResumeRequest1) to the base station to perform an RRC connection resume procedure with the NR base station 14-02. Upon receiving the RRC connection resume request message, the base station 14-02 may transmit (14-60) an RRC connection resume message (RRCnResume) to the UE 14-01 in response thereto. The UE receiving the RRC connection resume message may apply the RRC connection resume message and transition to the RRC connected mode (14-61). Then, the RRC connected mode UE may transmit (14-65) an RRC connection resume complete message (RRCResumeComplete) to the base station. If the LTE supports storage of mobility history information according to the above-described embodiment or supports SCG MHI, and mobility history information is present in the VarMobilityHistoryReport (If the LTE supports storage of mobility history information or storage of SCG MHI and the LTE has mobility history information available in VarMobilityHistoryReport), the UE may include the mobilityHistoryAvail indicator in the RRC connection resume complete message and transmit it to the base station (14-65).

In step 14-70, when security is successfully activated, the NR base station 14-02 may perform a UE information procedure. That is, the base station 14-02 may transmit (14-70) a UE information request message (UEInformationRequest) to the UE 14-01 to request the conventional mobility history information or SCG MHI from the LTE 8-01. The LTE information request message may include a MobilityHistoryReportReq indicator.

When security is successfully activated in step 14-75, the UE 14-01 may transmit (14-75) a LTE information response message (UEInformationResponse) to the NR base station 14-02. If mobilityHistoryReportReq is set to true in the received UE information request message, the UE may perform at least one of the following series of procedures.
- may include information in VarMobilityHistoryReport, in mobilityHistoryReport (include the *mobilityHistoryReport* and set it to include entries from *VarMobilityHistoryReport*) If the VarMobilitHistoryReport has an SCG MHI, the UE may include it in the mobilityHistoryReport. Or, when the SCG MHI is present in the VarMobilitHistoryReport only when the NR base station 14-02 broadcasts the indicator indicating that the SCG MHI is supported in the system information, the LTE may include it in the mobilityHistoryReport.
- if necessary, the oldest information may be deleted, and information about the current PCell may be included in the mobilityHistoryReport as follows (include in the *mobilityHistoryReport* an entry for the current PCell, possibly after removing the oldest entry if required, set its fields as follows)
- may set the global cell identifier of the current PCell to visitedCellId (set *visitedCellld* to the global cell identity of the current PCell)
- may set the time spent in the current cell in the timeSpent field (set field *timeSpent* to the time spent in the current PCell)
- When the PSCell is set, if necessary, the oldest information may be deleted, and information about the current PSCell may be included in the mobilityHistoryReport as follows (include in the *mobilityHistoryReport* an entry for the current PSCell, possibly after removing the oldest entry if required, set its fields as follows)
- The global cell identifier of the current PSCell or the carrier frequency and physical cell identifier of the PSCell may be set to visitedCellId visitedCellId (set *visitedCellld* to the global cell identity or carrier frequency and physical cell identity of the current PSCell)
- may set the time spent in the current cell in the timeSpent field (set field *timeSpent* to the time spent in the current PSCell)
- An indicator for indicating the PSCell may be included.

The UE may perform the above-described procedures to include the mobilityHistoryReport in the UE information response message and transmit it to the base station (14-75).

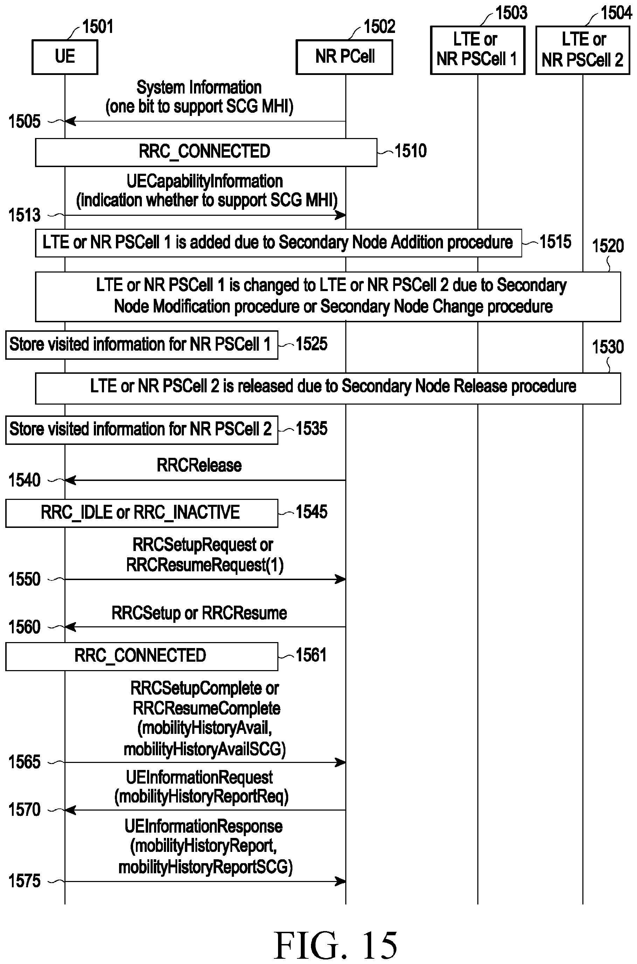

FIG. 15 is a view illustrating a UE operation in which a UE stores secondary cell group (SCG) mobility history information (hereinafter, `SCG MHI') and reports it to a base station in an NR system according to an embodiment of the disclosure.

Referring to FIG. 15, the NR base station 15-02 may broadcast system information (15-05). According to an embodiment of the disclosure, it is proposed that the base station or the NR cell 15-02 broadcasts an indicator indicating that SCG MHI is supported in system information. If the indicator is broadcast in the system information, the UE 15-01 may store the SCG MHI in the VarMobilityHistoryReport when the PSCell is changed or when the PSCell is released.

In step 15-10, the UE 15-01 may be in the RRC connected mode RRC_CONNECTED by establishing an RRC connection with the NR base station 15-02 (15-10).

In step 15-13, the UE 15-01 may transmit a UE capability information message (UECapabilityInformation) including an indicator that the SCG MHI may be stored to the NR base station 15-02. It is proposed that the UE according to an embodiment of the disclosure transmits LTE capability information message (LTECapabilityInformation) including the indicator that the SCG MHI may be stored when it has the capability of storing SCG MHI to the NR base station. Alternatively, even if the UE according to an embodiment of the disclosure has the capability to store the SCG MHI, as in the above-described embodiment, the LTE may not notify the NR base station of the LTE capability information message (LTECapabilityInformation).

In step 15-15, the master node (MN) 15-02 may initiate the secondary node addition procedure to add the secondary node (SN) 15-03. The specific secondary node addition procedure may follow section TS 37.340 10.2. LTE or NR PSCell 1 15-03 may be added to the UE 15-01 through step 15-15.

In step 15-20, for the LTE 15-01, LTE or NR PSCell 1 15-03 may be changed to LTE or NR PSCell 2 15-04 through a secondary node modification procedure or a secondary node change procedure. The specific secondary node modification procedure or secondary node change procedure may follow section TS 37.340 10.3 or section TS 37.340 10.5.

In step 15-25, the UE 15-01 may store the SCG MHI for LTE or NR PSCell 1 in VarMobilityHistoryReportSCG which is a new variable. Specifically, the LTE may perform at least one of the following operations to store the SCG MHI in VarMobilityHistoryReportSCG.

### Operations:

- When the LTE or NR PSCell is changed (LTE or NR PSCell 1 → LTE or NR PSCell 2), if necessary, the oldest entry value is deleted, and the following may be included in the entry in the VarMobilityHistoryReportSCG variable (include an entry in variable VarMobilityHistoryReportSCG possibly after removing the oldest entry, if necessary, according to the following)

If there is the global cell identifier of the previous PSCell (LTE or NR PSCell 1), the global cell identifier of the previous PSCell may be stored in the visitedCellId field (if the global cell identity of the previous PSCell is available, include the global cell identity of previous PSCell in the field visitedCellId of the entry). Otherwise, the carrier frequency and physical cell identifier of the previous PSCell may be stored in the visitedCellId field (else, include the physical cell identity and carrier frequency of that cell in the field *visitedCellld* of the entry).

The time spent in the previous PSCell may be stored in the timeSpent field (set the field *timeSpent* of the entry as the time spent in the previous PSCell)

While spent in the previous PSCell, the global cell identifier of the PCell or the carrier frequency and physical cell identifier of the PCell may be included. In this case, there may be one or more global cell identifiers of the PCell or carrier frequency and physical cell identifiers of the PCell.

In step 15-30, the LTE or NR PSCell 2 15-04 configured for the UE 15-01 may be released through the secondary node release procedure. The specific secondary node release procedure or secondary node change procedure may follow section TS 37.340 10.4.

In step 15-35, the UE 15-01 may store the SCG MHI for LTE or NR PSCell 2 in the VarMobilityHistoryReport. Specifically, the LTE may perform at least one of the following operations to store the SCG MHI in VarMobilityHistoryReportSCG.

### Operations:

When the LTE or NR PSCell is released (release of LTE or NR PSCell 2), if necessary, the oldest entry value is deleted, and the following may be included in the entry in the VarMobilityHistoryReportSCG variable (include an entry in variable VarMobilityHistoryReportSCG possibly after removing the oldest entry, if necessary, according to the following)

If there is the global cell identifier of the released PSCell (LTE or NR PSCell 2), the global cell identifier of the released PSCell may be stored in the visitedCellId field (if the global cell identity of the released PSCell is available, include the global cell identity of released PSCell in the field visitedCellId of the entry). Otherwise, the carrier frequency and physical cell identifier of the released PSCell may be stored in the visitedCellId field (else, include the physical cell identity and carrier frequency of that cell in the field *visitedCellld* of the entry).

The time spent in the released PSCell may be stored in the timeSpent field (set the field *timeSpent* of the entry as the time spent in the released PSCell)

The global cell identifier of the PCell set until the PSCell is released or the carrier frequency and physical cell identifier of the PCell may be included. In this case, there may be one or more global cell identifiers of the PCell or carrier frequency and physical cell identifiers of the PCell.

In step 15-40, the NR base station 15-02 may transmit an RRC connection release message to the LTE 15-01. If the RRC connection release message includes suspendConfig information, the UE in the RRC connected mode may transition (15-45) to the RRC inactive mode (RRC_INACTIVE). If the RRC connection release message does not include suspendConfig information, the UE in the RRC connected mode may transition (15-45) to the RRC idle mode (RRC_IDLE).

The RRC idle mode UE 15-01 may transmit (15-50) an RRC connection request message (RRCSetupRequest) to the base station to perform an RRC connection setup procedure with the NR base station 15-02. Upon receiving the RRC connection request message, the base station 15-02 may transmit (15-60) an RRC connection setup message (RRCSetup) to the UE 15-01 in response thereto.

The UE receiving the RRC connection setup message may apply the RRC connection setup message and transition to the RRC connected mode (15-61). Then, the RRC connected mode UE may transmit an RRC connection setup complete message (RRCSetupComplete) to the base station (15-65). If the LTE supports storage of mobility history information in the above-described embodiment, and mobility history information is present in the VarMobilityHistoryReport (If the LTE supports storage of mobility history information and the UE has mobility history information available in VarMobilityHistoryReport), the UE may include the mobilityHistoryAvail indicator in the RRC connection setup complete message and transmit it to the base station (15-65).

If the LTE supports storage of SCG MHI, and mobility history information is present in VarMobilityHistoryReportSCG (If the UE supports storage of SCG MHI and the UE has mobility history information available in VarMobilityHistoryReportSCG), the UE may include the mobilityHistoryAvailSCG indicator which is a new indicator in the RRC connection setup complete message and transmit (15-65) it to the base station. Or, if the UE supports storage of SCG MHI, and mobility history information is present in VarMobilityHistoryReportSCG (If the UE supports storage of SCG MHI and the UE has mobility history information available in VarMobilityHistoryReportSCG), when the NR base station 15-02 broadcasts an indicator indicating that SCG MHI is supported in the system information, the UE may include the mobilityHistoryAvailSCG which is a new indicator in the RRC connection setup complete message and transmit (15-65) it to the base station.

The RRC inactive mode LTE 15-01 may transmit (15-50) an RRC connection resume request message (RRCResumeRequest) or RRC connection resume request 1 message (RRCResumeRequest1) to the base station to perform an RRC connection resume procedure with the NR base station 15-02. Upon receiving the RRC connection resume request message, the base station 15-02 may transmit (15-60) an RRC connection resume message (RRCResume) to the UE 15-01 in response thereto. The UE receiving the RRC connection resume message may apply the RRC connection resume message and transition to the RRC connected mode (15-61). Then, the RRC connected mode UE may transmit (15-65) an RRC connection resume complete message (RRCResumeComplete) to the base station. If the LTE supports storage of mobility history information in the above-described embodiment, and mobility history information is present in the VarMobilityHistoryReport (If the LTE supports storage of mobility history information and the UE has mobility history information available in VarMobilityHistoryReport), the UE may include the mobilityHistoryAvail indicator in the RRC connection resume complete message and transmit it to the base station (15-65). If the LTE supports storage of SCG MHI, and mobility history information is present in VarMobilityHistoryReportSCG (If the LTE supports storage of SCG MHI and the UE has mobility history information available in VarMobilityHistoryReportSCG), the LTE may include the mobilityHistoryAvailSCG indicator which is a new indicator in the RRC connection resume complete message and transmit (15-65) it to the base station.

Or, if the LTE supports storage of SCG MHI, and mobility history information is present in VarMobilityHistoryReportSCG (If the UE supports storage of SCG MHI and the UE has mobility history information available in VarMobilityHistoryReportSCG), when the NR base station 15-02 broadcasts an indicator indicating that SCG MHI is supported in the system information, the UE may include the mobilityHistoryAvailSCG which is a new indicator in the RRC connection resume complete message and transmit (15-65) it to the base station.

In step 15-70, when security is successfully activated, the NR base station 15-02 may perform a LTE information procedure. That is, the base station 15-02 may transmit (15-70) a UE information request message (UEInformationRequest) to the UE 15-01 to request the conventional mobility history information or SCG MHI from the LTE 8-01. The LTE information request message may include a MobilityHistoryReportReq indicator.

When security is successfully activated in step 15-75, the UE 15-01 may transmit (15-75) a LTE information response message (UEInformationResponse) to the NR base station 15-02. If mobilityHistoryReportReq is set to true in the received UE information request message, the UE may perform at least one of the following series of procedures.
- may include information in VarMobilityHistoryReport, in mobilityHistoryReport (include the *mobilityHistoryReport* and set it to include entries from *VarMobilityHistoryReport*)
- if necessary, the oldest information may be deleted, and information about the current PCell may be included in the mobilityHistoryReport as follows (include in the *mobilityHistoryReport* an entry for the current PCell, possibly after removing the oldest entry if required, set its fields as follows)
- may set the global cell identifier of the current PCell to visitedCellId (set *visitedCellld* to the global cell identity of the current PCell)
- may set the time spent in the current cell in the timeSpent field (set field *timeSpent* to the time spent in the current PCell)
- If the VarMobilitHistoryReportSCG has an SCG MHI, the UE may include it in the mobilityHistoryReportSCG. Or, when the SCG MHI is present in the VarMobilitHistoryReportSCG only when the NR base station 15-02 broadcasts the indicator indicating that the SCG MHI is supported in the system information, the UE may include it in the mobilityHistoryReportSCG.
- When the PSCell is set, if necessary, the oldest information may be deleted, and information about the current PSCell may be included in the mobilityHistoryReportSCG as follows (include in the *mobilityHistoryReportSCG* an entry for the current PSCell, possibly after removing the oldest entry if required, set its fields as follows)
- The global cell identifier of the current PSCell or the carrier frequency and physical cell identifier of the PSCell may be set to visitedCellId visitedCellId (set *visitedCellld* to the global cell identity or carrier frequency and physical cell identity of the current PSCell)
- may set the time spent in the current cell in the timeSpent field (set field *timeSpent* to the time spent in the current PSCell)

The UE may perform the above-described procedures to include the mobilityHistoryReport and/or mobilityHistoryReportSCG in the UE information response message and transmit it to the base station (15-75).

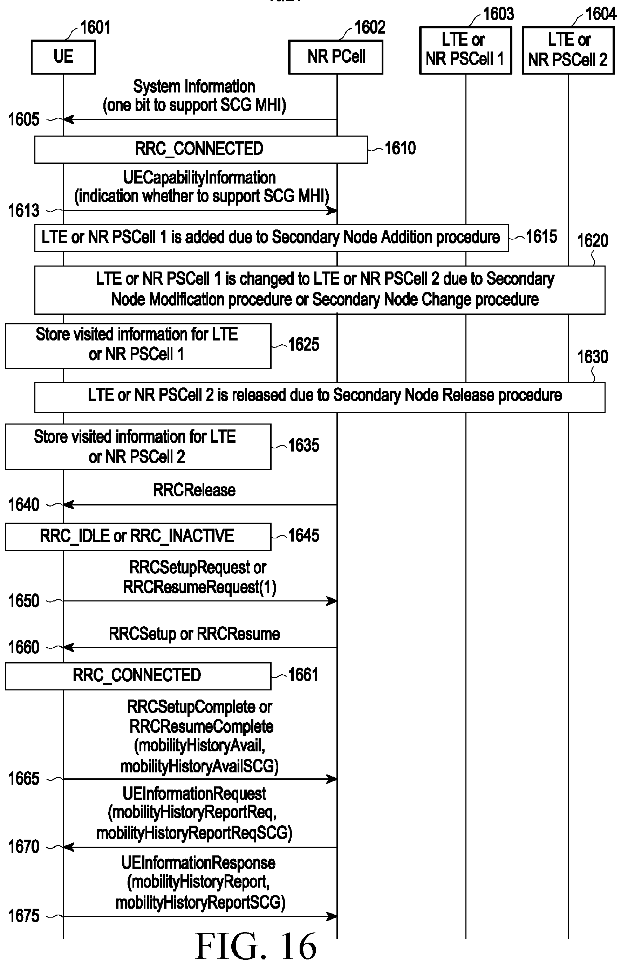

FIG. 16 is a view illustrating a UE operation in which a UE stores secondary cell group (SCG) mobility history information (hereinafter, `SCG MHI') and reports it to a base station in an NR system according to an embodiment of the disclosure.

Referring to FIG. 16, the NR base station 16-02 may broadcast system information (16-05). According to an embodiment of the disclosure, it is proposed that the base station or the NR cell 16-02 broadcasts an indicator indicating that SCG MHI is supported in system information. If the indicator is broadcast in the system information, the UE 16-01 may store the SCG MHI in the VarMobilityHistoryReport when the PSCell is changed or when the PSCell is released.

In step 16-10, the UE 16-01 may be in the RRC connected mode RRC_CONNECTED by establishing an RRC connection with the NR base station 16-02 (16-10).

In step 16-13, the UE 16-01 may transmit a UE capability information message (UECapabilityInformation) including an indicator that the SCG MHI may be stored to the NR base station 16-02. It is proposed that the UE according to an embodiment of the disclosure transmits LTE capability information message (LTECapabilityInformation) including the indicator that the SCG MHI may be stored when it has the capability of storing SCG MHI to the NR base station. Alternatively, even if the UE according to an embodiment of the disclosure has the capability to store the SCG MHI, as in the above-described embodiment, the LTE may not notify the NR base station of the LTE capability information message (LTECapabilityInformation).

In step 16-15, the master node (MN) 16-02 may initiate the secondary node addition procedure to add the secondary node (SN) 16-03. The specific secondary node addition procedure may follow section TS 37.340 10.2. LTE or NR PSCell 1 16-03 may be added to the UE 16-01 through step 16-15.

In step 16-20, for the LTE 16-01, LTE or NR PSCell 1 16-03 may be changed to LTE or NR PSCell 2 16-04 through a secondary node modification procedure or a secondary node change procedure. The specific secondary node modification procedure or secondary node change procedure may follow section TS 37.340 10.3 or section TS 37.340 10.5.

In step 16-25, the UE 16-01 may store the SCG MHI for LTE or NR PSCell 1 in VarMobilityHistoryReportSCG which is a new variable. Specifically, the LTE may perform at least one of the following operations to store the SCG MHI in VarMobilityHistoryReportSCG.

### Operations:

- When the LTE or NR PSCell is changed (LTE or NR PSCell 1 → LTE or NR PSCell 2), if necessary, the oldest entry value is deleted, and the following may be included in the entry in the VarMobilityHistoryReportSCG variable (include an entry in variable VarMobilityHistoryReportSCG possibly after removing the oldest entry, if necessary, according to the following)

If there is the global cell identifier of the previous PSCell (LTE or NR PSCell 1), the global cell identifier of the previous PSCell may be stored in the visitedCellId field (if the global cell identity of the previous PSCell is available, include the global cell identity of previous PSCell in the field visitedCellId of the entry). Otherwise, the carrier frequency and physical cell identifier of the previous PSCell may be stored in the visitedCellId field (else, include the physical cell identity and carrier frequency of that cell in the field *visitedCellld* of the entry).

The time spent in the previous PSCell may be stored in the timeSpent field (set the field *timeSpent* of the entry as the time spent in the previous PSCell)

While spent in the previous PSCell, the global cell identifier of the PCell or the carrier frequency and physical cell identifier of the PCell may be included. In this case, there may be one or more global cell identifiers of the PCell or carrier frequency and physical cell identifiers of the PCell.

In step 16-30, the LTE or NR PSCell 2 16-04 configured for the UE 16-01 may be released through the secondary node release procedure. The specific secondary node release procedure or secondary node change procedure may follow section TS 37.340 10.4.

In step 16-35, the UE 16-01 may store the SCG MHI for LTE or NR PSCell 2 in the VarMobilityHistoryReport. Specifically, the LTE may perform at least one of the following operations to store the SCG MHI in VarMobilityHistoryReportSCG.

### Operations:

- When the LTE or NR PSCell is released (release of LTE or NR PSCell 2), if necessary, the oldest entry value is deleted, and the following may be included in the entry in the VarMobilityHistoryReportSCG variable (include an entry in variable VarMobilityHistoryReportSCG possibly after removing the oldest entry, if necessary, according to the following)

If there is the global cell identifier of the released PSCell (LTE or NR PSCell 2), the global cell identifier of the released PSCell may be stored in the visitedCellId field (if the global cell identity of the released PSCell is available, include the global cell identity of released PSCell in the field visitedCellId of the entry). Otherwise, the carrier frequency and physical cell identifier of the released PSCell may be stored in the visitedCellId field (else, include the physical cell identity and carrier frequency of that cell in the field *visitedCellld* of the entry).

The time spent in the released PSCell may be stored in the timeSpent field (set the field *timeSpent* of the entry as the time spent in the released PSCell)

The global cell identifier of the PCell set until the PSCell is released or the carrier frequency and physical cell identifier of the PCell may be included. In this case, there may be one or more global cell identifiers of the PCell or carrier frequency and physical cell identifiers of the PCell.

In step 16-40, the NR base station 16-02 may transmit an RRC connection release message to the LTE 16-01. If the RRC connection release message includes suspendConfig information, the UE in the RRC connected mode may transition (16-45) to the RRC inactive mode (RRC_INACTIVE). If the RRC connection release message does not include suspendConfig information, the UE in the RRC connected mode may transition (16-45) to the RRC idle mode (RRC_IDLE).

The RRC idle mode UE 16-01 may transmit (16-50) an RRC connection request message (RRCSetupRequest) to the base station to perform an RRC connection setup procedure with the NR base station 16-02. Upon receiving the RRC connection request message, the base station 16-02 may transmit (16-60) an RRC connection setup message (RRCSetup) to the UE 16-01 in response thereto. The UE receiving the RRC connection setup message may apply the RRC connection setup message and transition to the RRC connected mode (16-61). Then, the RRC connected mode UE may transmit an RRC connection setup complete message (RRCSetupComplete) to the base station (16-65). If the LTE supports storage of mobility history information in the above-described embodiment, and mobility history information is present in the VarMobilityHistoryReport (If the LTE supports storage of mobility history information and the UE has mobility history information available in VarMobilityHistoryReport), the UE may include the mobilityHistoryAvail indicator in the RRC connection setup complete message and transmit it to the base station (16-65). If the LTE supports storage of SCG MHI, and mobility history information is present in VarMobilityHistoryReportSCG (If the LTE supports storage of SCG MHI and the UE has mobility history information available in VarMobilityHistoryReportSCG), the LTE may include the mobilityHistoryAvailSCG indicator which is a new indicator in the RRC connection setup complete message and transmit (16-65) it to the base station. Or, if the LTE supports storage of SCG MHI, and mobility history information is present in VarMobilityHistoryReportSCG (If the UE supports storage of SCG MHI and the UE has mobility history information available in VarMobilityHistoryReportSCG), when the NR base station 16-02 broadcasts an indicator indicating that SCG MHI is supported in the system information, the UE may include the mobilityHistoryAvailSCG which is a new indicator in the RRC connection setup complete message and transmit (16-65) it to the base station.

The RRC inactive mode LTE 16-01 may transmit (16-50) an RRC connection resume request message (RRCResumeRequest) or RRC connection resume request 1 message (RRCResumeRequest1) to the base station to perform an RRC connection resume procedure with the NR base station 16-02. Upon receiving the RRC connection resume request message, the base station 16-02 may transmit (16-60) an RRC connection resume message (RRCResume) to the UE 16-01 in response thereto. The UE receiving the RRC connection resume message may apply the RRC connection resume message and transition to the RRC connected mode (16-61). Then, the RRC connected mode UE may transmit (16-65) an RRC connection resume complete message (RRCResumeComplete) to the base station. If the LTE supports storage of mobility history information in the above-described embodiment, and mobility history information is present in the VarMobilityHistoryReport (If the LTE supports storage of mobility history information and the UE has mobility history information available in VarMobilityHistoryReport), the UE may include the mobilityHistoryAvail indicator in the RRC connection resume complete message and transmit it to the base station (16-65). If the UE supports storage of SCG MHI, and mobility history information is present in VarMobilityHistoryReportSCG (If the LTE supports storage of SCG MHI and the UE has mobility history information available in VarMobilityHistoryReportSCG), the LTE may include the mobilityHistoryAvailSCG indicator which is a new indicator in the RRC connection resume complete message and transmit (16-65) it to the base station. Or, if the LTE supports storage of SCG MHI, and mobility history information is present in VarMobilityHistoryReportSCG (If the LTE supports storage of SCG MHI and the LTE has mobility history information available in VarMobilityHistoryReportSCG), when the LTE base station 16-02 broadcasts an indicator indicating that SCG MHI is supported in the system information, the UE may include the mobilityHistoryAvailSCG which is a new indicator in the RRC connection resume complete message and transmit (16-65) it to the base station.

In step 16-70, when security is successfully activated, the NR base station 16-02 may perform a UE information procedure. That is, the base station 16-02 may transmit (16-70) a UE information request message (UEInformationRequest) to the UE 16-01 to request the conventional mobility history information or SCG MHI from the LTE 8-01. The LTE information request message may include a MobilityHistoryReportReq indicator to report conventional mobility history information and/or a new MobilityHistoryReportReqSCG indicator to report SCG MHI.

When security is successfully activated in step 16-75, the UE 16-01 may transmit (16-75) a LTE information response message (UEInformationResponse) to the NR base station 16-02. If mobilityHistoryReportReq is set to true in the received UE information request message, the UE may perform at least one of the following series of procedures.
- may include information in VarMobilityHistoryReport, in mobilityHistoryReport (include the *mobilityHistoryReport* and set it to include entries from *VarMobilityHistoryReport*)
- if necessary, the oldest information may be deleted, and information about the current PCell may be included in the mobilityHistoryReport as follows (include in the *mobilityHistoryReport* an entry for the current PCell, possibly after removing the oldest entry if required, set its fields as follows)
- may set the global cell identifier of the current PCell to visitedCellId (set *visitedCellld* to the global cell identity of the current PCell)
- may set the time spent in the current cell in the timeSpent field (set field *timeSpent* to the time spent in the current PCell)

If mobilityHistoryReportReqSCG is set to true in the received LTE information request message, the UE may perform at least one of the following series of procedures.
- If the VarMobilitHistoryReportSCG has an SCG MHI, the UE may include it in the mobilityHistoryReportSCG. Or, when the SCG MHI is present in the VarMobilitHistoryReportSCG only when the NR base station 16-02 broadcasts the indicator indicating that the SCG MHI is supported in the system information, the UE may include it in the mobilityHistoryReportSCG.
- When the PSCell is set, if necessary, the oldest information may be deleted, and information about the current PSCell may be included in the mobilityHistoryReportSCG as follows (include in the *mobilityHistoryReportSCG* an entry for the current PSCell, possibly after removing the oldest entry if required, set its fields as follows)
- The global cell identifier of the current PSCell or the carrier frequency and physical cell identifier of the PSCell may be set to visitedCellId visitedCellId (set *visitedCellld* to the global cell identity or carrier frequency and physical cell identity of the current PSCell)
- may set the time spent in the current cell in the timeSpent field (set field *timeSpent* to the time spent in the current PSCell)

The UE may perform the above-described procedures to include the mobilityHistoryReport and/or mobilityHistoryReportSCG in the UE information response message and transmit it to the base station (16-75).

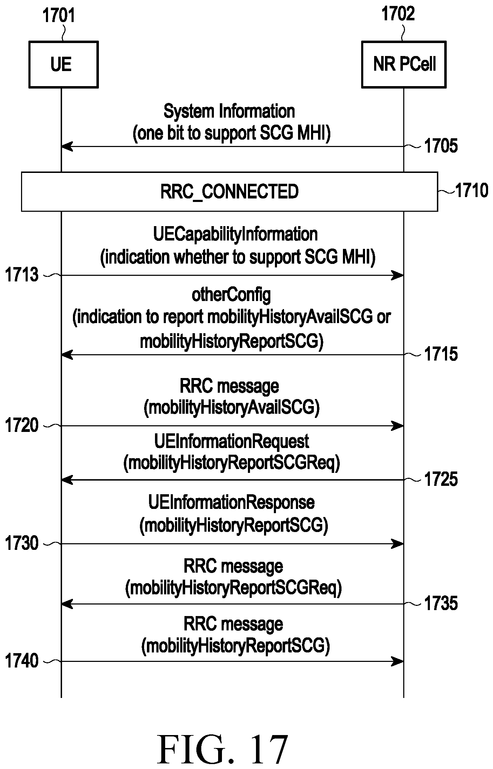

FIG. 17 is a view illustrating a UE operation in which a UE reports secondary cell group (SCG) mobility history information (hereinafter, `SCG MHI') to a base station in an NR system according to an embodiment of the disclosure.

Referring to FIG. 17, the NR base station 17-02 may broadcast system information (17-05). According to an embodiment of the disclosure, it is proposed that the base station or the NR cell 17-02 broadcasts an indicator indicating that SCG MHI is supported in system information. If the indicator is broadcast in the system information, the UE 17-01 may store the SCG MHI in the VarMobilityHistoryReport when the PSCell is changed or when the PSCell is released.

In step 17-10, the UE 17-01 may be in the RRC connected mode RRC_CONNECTED by establishing an RRC connection with the NR base station 17-02 (17-10).

In step 17-13, the UE 17-01 may transmit a UE capability information message (UECapabilityInformation) including an indicator that the SCG MHI may be stored to the NR base station 17-02. It is proposed that the UE according to an embodiment of the disclosure transmits LTE capability information message (LTECapabilityInformation) including the indicator that the SCG MHI may be stored when it has the capability of storing SCG MHI to the NR base station.

In step 17-15, the NR base station 17-02 may configure the UE 17-01 to report the mobilityHistoryAvailSCG indicator or the mobilityHistoryReportSCG by using predetermined configuration information. For example, the predetermined configuration information may mean the otherConfig field.

In step 17-20, the LTE 17-01 may include a mobilityHistoryAvailSCG indicator in a predetermined RRC message and may transmit it to the NR base station 17-02. The predetermined RRC message may mean, e.g., one of an RRC connection resume complete message (RRCnResumeComplete), an RRC connection reconfiguration complete message (RRCReconfigurationComplete), and an RRC connection reestablishment complete message (RRCReestablishmentComplete).

In step 17-25, the NR base station 17-02 may include mobilityHistoryReportSCG in the UE information request message (UEInformationRequest) and transmit it to the UE 17-01.

In step 17-30, the UE 17-01 may include mobilityHistoryReportSCG in the UE information response message (UEInformationResponse) and transmit it. In other words, in step 17-25, if mobilityHistoryReportReqSCG is set to true in the received UE information request message, the UE may perform at least one of the following series of procedures.
- If the VarMobilitHistoryReportSCG has an SCG MHI, the UE may include it in the mobilityHistoryReportSCG.
- When the PSCell is set, if necessary, the oldest information may be deleted, and information about the current PSCell may be included in the mobilityHistoryReportSCG as follows (include in the *mobilityHistoryReportSCG* an entry for the current PSCell, possibly after removing the oldest entry if required, set its fields as follows)

The global cell identifier of the current PSCell or the carrier frequency and physical cell identifier of the PSCell may be set to visitedCellId visitedCellId (set *visitedCellld* to the global cell identity or carrier frequency and physical cell identity of the current PSCell)
- may set the time spent in the current cell in the timeSpent field (set field *timeSpent* to the time spent in the current PSCell)

Alternatively, in step 17-35, the NR base station 17-02 may transmit a predetermined RRC message including mobilityHistoryReportSCG to the UE 17-01. The predetermined RRC message may mean, e.g., one of an RRC connection resume message (RRCResume), an RRC connection reconfiguration message (RRCReconfiguration), and an RRC connection reestablishment message (RRCReestablishment).

In step 17-40, a predetermined RRC message including mobilityHistoryReportSCG may be transmitted to the UE 17-01. The predetermined RRC message may mean, e.g., one of an RRC connection resume complete message (RRCResumeComplete), an RRC connection reconfiguration complete message (RRCReconfigurationComplete), and an RRC connection reestablishment complete message (RRCReestablishmentComplete). In other words, if mobilityHistoryReportReqSCG is set to true in the RRC message received in step 17-35, the UE may perform the above-described procedure to include mobilityHistoryReportReq in the RRC message in an RRC message responsive to the RRC message received In step 17-35 and transmit it.

In all of the above-described embodiments, the MN may forward the SCG MHI received from the UE to the SN. Alternatively, in all of the above-described embodiments, the UE may transmit the SCG MHI to the MN only when both the MN and the SN support the SCG MHI.

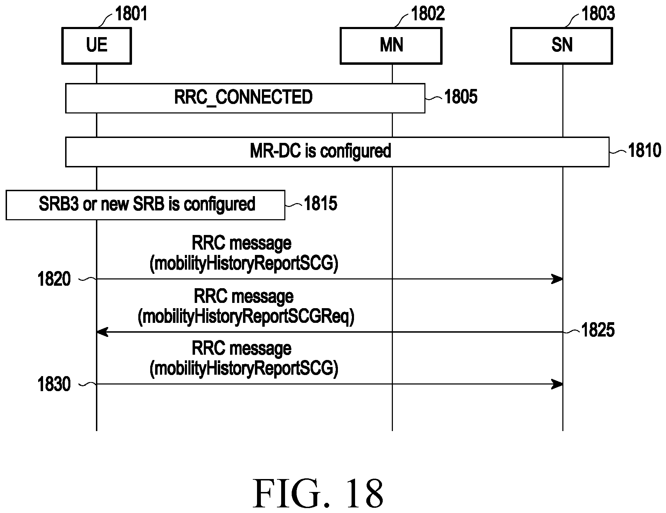

FIG. 18 is a view illustrating a LTE operation in which a LTE directly reports secondary cell group (SCG) mobility history information (hereinafter, `SCG MHI') to a secondary node (SN) in an NR system according to an embodiment of the disclosure.

The UE 18-01 and the base stations 18-02 and 18-03 according to an embodiment of the disclosure may follow the operations of the above-described embodiments.

In step 18-05, the UE 18-01 may be in the RRC connected mode (RRC_CONNECTED) by establishing an RRC connection with the master node (MN) 18-02.

In step 18-10, an MR-DC may be configured for the LTE 18-01, and a secondary node (SN) 18-03 may be configured.

In step 18-15, an SRB3 may be configured for the UE 18-01, or a new SRB capable of directly transmitting an RRC message to the SN may be configured.

In step 18-20, when the UE 18-01 supports SCG MHI storage and VarMobilityHistoryReportSCG has mobility history information, the UE 18-01 may transmit a predetermined RRC message including a mobilityHistoryReportSCG indicator to the SN 18-03 through the SRB3 or the new SRB. For example, the predetermined RRC message may mean an RRC connection reconfiguration complete message or an uplink information transfer MRDC message. Operations of the UE when transmitting the RRC message may follow the above-described embodiments.

In step 18-25, the SN 18-03 may transmit a predetermined RRC message including mobilityHistoryReportSCGReq to the LTE 18-01 through the SRB3 or the new SRB to recover the SCG MHI from the UE 18-01. For example, the predetermined RRC message may mean an RRC connection reconfiguration message or a downlink information transfer MRDC message.

In step 18-30, the UE 18-01 may transmit a predetermined RRC message including mobilityHistoryReportSCG information to the SN 18-03 through the SRB3 or the new SRB. For example, the predetermined RRC message may mean an RRC connection reconfiguration complete message or an uplink information transfer MRDC message. Operations of the UE when transmitting the RRC message may follow the above-described embodiments.

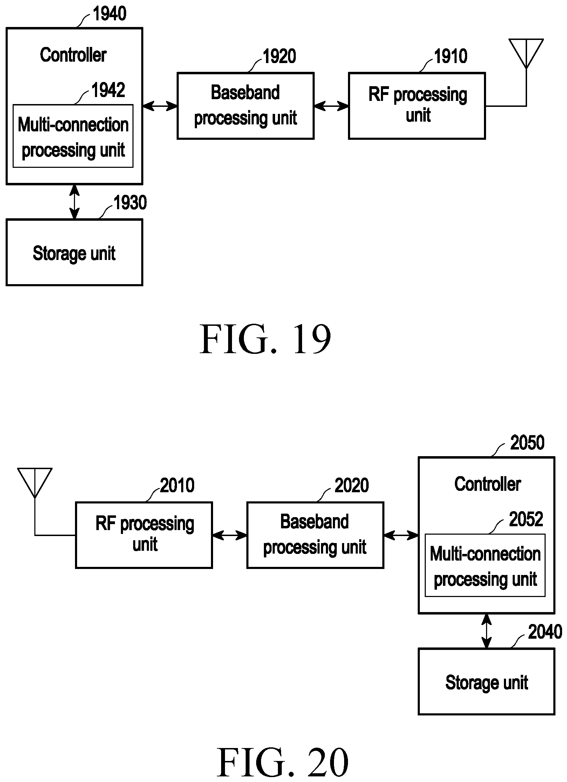

FIG. 19 is a block diagram illustrating an inner structure of a terminal according to an embodiment of the disclosure.

Referring to the figure, the UE includes a radio frequency (RF) processing unit 19-10, a baseband processing unit 19-20, a storage unit 19-30, and a controller 19-40.

The RF processing unit 19-10 performs functions for transmitting/receiving signals through a radio channel, such as signal band conversion or amplification. In other words, the RF processing unit 19-10 up-converts the baseband signal provided from the baseband processing unit 19-20 into an RF band signal, transmits it through the antenna, and down-converts the RF band signal received through the antenna into a baseband signal. For example, the RF processing unit 19-10 may include, e.g., a transmission filter, a reception filter, an amplifier, a mixer, an oscillator, a digital-to-analog converter (DAC), and an analog-to-digital converter (ADC). In the figure, only one antenna is shown, but the LTE may include a plurality of antennas. Further, the RF processing unit 19-10 may include a plurality of RF chains. Further, the RF processing unit 19-10 may perform beamforming. For beamforming, the RF processing unit 19-10 may adjust the phase and magnitude of each of the signals transmitted/received through the plurality of antennas or antenna elements. Further, the RF processing unit may perform MIMO and receive several layers upon performing the MIMO operation.

The baseband processing unit 19-20 performs the function of conversion between a baseband signal and bit stream according to the system physical layer specifications. For example, upon data transmission, the baseband processing unit 19-20 encodes and modulates a transmission bit stream, thereby generating complex symbols. Further, upon data reception, the baseband processing unit 19-20 restores the reception bit stream by demodulating and decoding the baseband signal provided from the RF processing unit 19-10. For example, in the case of following the orthogonal frequency division multiplexing (OFDM) scheme, upon data transmission, the baseband processing unit 19-20 may generate complex symbols by encoding and modulating the transmission bit stream, map the complex symbols to a subcarrier, and then configures OFDM symbols through inverse fast Fourier transform (IFFT) operation and cyclic prefix (CP) insertion. Further, upon data reception, the baseband processing unit 19-20 divides the baseband signal provided from the RF processing unit 19-10 into OFDM symbol units, restores the signals mapped to the subcarriers through fast Fourier transform (FFT), and then restores the reception bit stream through demodulation and decoding.

The baseband processing unit 19-20 and the RF processing unit 19-10 transmit and receive signals as described above. Accordingly, the baseband processing unit 19-20 and the RF processing unit 19-10 may be referred to as a transmitter, a receiver, a transceiver, or a communication unit. Further, at least one of the baseband processing unit 19-20 and the RF processing unit 19-10 may include a plurality of communication modules for supporting a plurality of different radio access technologies. Further, at least one of the baseband processing unit 19-20 and the RF processing unit 19-10 may include different communication modules for processing signals in different frequency bands. For example, the different radio access technologies may include, e.g., wireless LAN (e.g., IEEE 802.11) or cellular network (e.g., LTE). Further, the different frequency bands may include a super-high frequency (SHF) (e.g., 2.NRHz or NRHz) band or millimeter wave (mmWave) (e.g., 60GHz) band.

The storage unit 19-30 stores a basic program for operating the LTE, application programs, configuration information, or other data. In particular, the storage unit 19-30 may store information related to the second access node performing wireless communication using the second radio access technology. Further, the storage unit 19-30 provides the stored data at the request of the controller 19-40.

The controller 19-40 controls the overall operation of the UE. For example, the controller 19-40 transmits/receives signals through the baseband processing unit 19-20 and the RF processing unit 19-10. Further, the controller 19-40 records and reads data in/from the storage unit 19-30. To that end, the controller 19-40 may include at least one processor. For example, the controller 19-40 may include a communication processor (CP) that performs control for communication and an application processor (AP) that controls an upper layer, such as an application program.

FIG. 20 is a block diagram illustrating a configuration of a base station according to an embodiment.

As shown in the figure, the base station may include an RF processing unit 20-10, a baseband processing unit 20-20, a backhaul communication unit 20-30, a storage unit 20-40, and a controller 20-50.

The RF processing unit 20-10 performs functions for transmitting/receiving signals through a radio channel, such as signal band conversion or amplification. In other words, the RF processing unit 20-10 up-converts the baseband signal provided from the baseband processing unit 20-20 into an RF band signal, transmits it through the antenna, and down-converts the RF band signal received through the antenna into a baseband signal. For example, the RF processing unit 20-10 may include a transmission filter, a reception filter, an amplifier, a mixer, an oscillator, a DAC, and an ADC. In the figure, only one antenna is shown, but the first access node may include a plurality of antennas. Further, the RF processing unit 20-10 may include a plurality of RF chains. Further, the RF processing unit 20-10 may perform beamforming. For beamforming, the RF processing unit 20-10 may adjust the phase and magnitude of each of the signals transmitted/received through the plurality of antennas or antenna elements. The RF processing unit may perform downlink MIMO operation by transmitting one or more layers.

The baseband processing unit 20-20 performs the function of conversion between a baseband signal and bit stream according to the physical layer specifications of the first radio access technology. For example, upon data transmission, the baseband processing unit 20-20 encodes and modulates a transmission bit stream, thereby generating complex symbols. Further, upon data reception, the baseband processing unit 20-20 restores the reception bit stream by demodulating and decoding the baseband signal provided from the RF processing unit 20-10. For example, in the case of following the OFDM scheme, upon data transmission, the baseband processing unit 20-20 may generate complex symbols by encoding and modulating the transmission bit stream, map the complex symbols to a subcarrier, and then configures OFDM symbols through IFFT operation and CP insertion. Further, upon data reception, the baseband processing unit 20-20 divides the baseband signal provided from the RF processing unit 20-10 into OFDM symbol units, restores the signals mapped to the subcarriers through the FFT, and then restores the reception bit stream through demodulation and decoding. The baseband processing unit 20-20 and the RF processing unit 20-10 transmit and receive signals as described above. Accordingly, the baseband processing unit 20-20 and the RF processing unit 20-10 may be referred to as a transmitter, a receiver, a transceiver, a communication unit, or a wireless communication unit.

The backhaul communication unit 20-30 provides an interface for performing communication with other nodes in the network. In other words, the backhaul communication unit 20-30 converts the bit stream transmitted from the main base station to another node, e.g., auxiliary base station or core network, into a physical signal, and converts the physical signal received from the other node into a bit stream.

The storage unit 20-40 stores a basic program for operating the main base station, application programs, configuration information, or other data. In particular, the storage unit 20-40 may store, e.g., information about the bearer allocated to the connected LTE and the result of measurement reported from the connected UE. Further, the storage unit 20-40 may store information that serves as a reference for determining whether to provide multiple connections to the UE or stop. Further, the storage unit 20-40 provides the stored data at the request of the controller 20-50.

The controller 20-50 controls the overall operation of the main base station. For example, the controller 20-50 transmits/receives signals through the baseband processing unit 20-20 and the RF processing unit 20-10 or through the backhaul communication unit 20-30. Further, the controller 20-50 records and reads data in/from the storage unit 20-30. To that end, the controller 20-50 may include at least one processor.

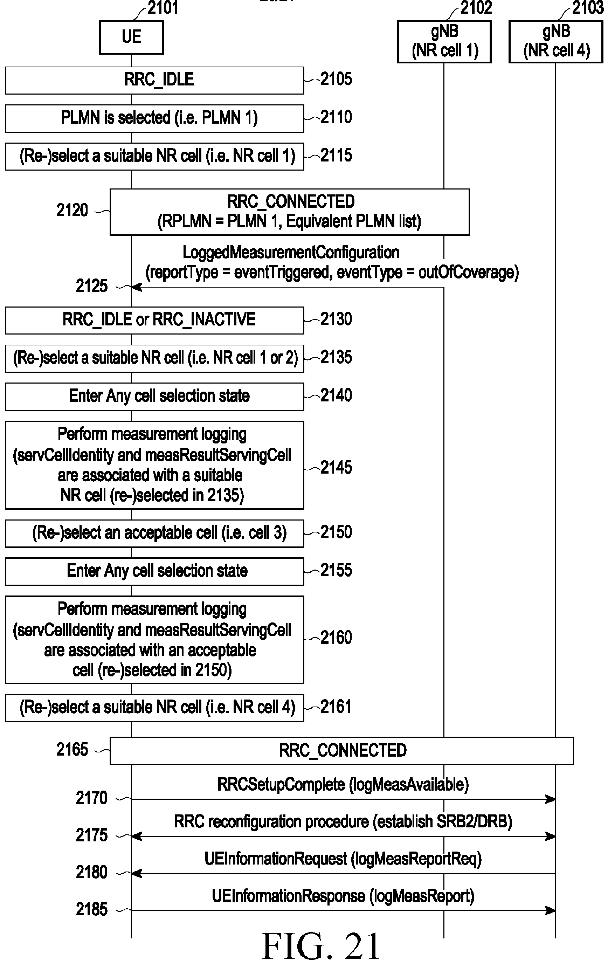

FIG. 21 is a view illustrating a procedure in which a UE performs measurement logging according to out of coverage based on an event set by an NR base station and reports the logged measurement value to the NR base station according to an embodiment of the disclosure.

Referring to FIG. 21, the UE 21-01 may be in the RRC idle mode (RRC_IDLE) (21-05).

In step 21-10, the LTE 21-01 may select a specific PLMN by performing a public land mobile network (PLMN) selection procedure. In the disclosure, for convenience of description, the PLMN selected by the UE is referred to as PLMN 1.

In step 21-15, the LTE 21-01 may select or reselect a suitable NR cell belonging to the PLMN selected in step 21-10. The definition of the suitable NR cell may follow the 3GPP TS 38.304 standard. The UE camping on the suitable NR cell is in the 'Camped Normally state'. In the disclosure, for convenience of description, the suitable NR cell selected or reselected by the UE may be referred to as NR cell 1.

In step 21-20, the UE 21-01 may perform an RRC connection establishment procedure with the suitable NR cell 21-02 selected or reselected In step 21-10 to transition to the RRC connected mode. The UE may successfully perform the NAS registration procedure after the RRC connection establishment procedure to the suitable NR cell 21-02, and thus the PLMN selected by the UE in step 21-10 may be registered in the NR system. In other words, the PLMN selected by the UE in step 21-10 may become a registered PLMN (RPLMN). Additionally, the RRC connected mode LTE may receive the equivalent PLMN list through the NAS registration procedure and manage/store/use the equivalent PLMN list. The equivalent PLMN list may refer to a list of PLMNs which the UE may regard as the same as the RPLMM in a subsequent cell selection, cell reselection, and handover process. In other words, the LTE does not need to perform a separate NAS registration procedure when handing over from the cell belonging to the equivalent PLMN list to the cell (re)selected or belonging to the equivalent PLMN list. For example, the cell belonging to the equivalent PLMN list may be a suitable NR cell.

In step 21-25, the UE 21-01 in the RRC connected mode may receive a LoggedMeasurementConfiguration message from the NR cell 21-02. The information included in the message is as follows.

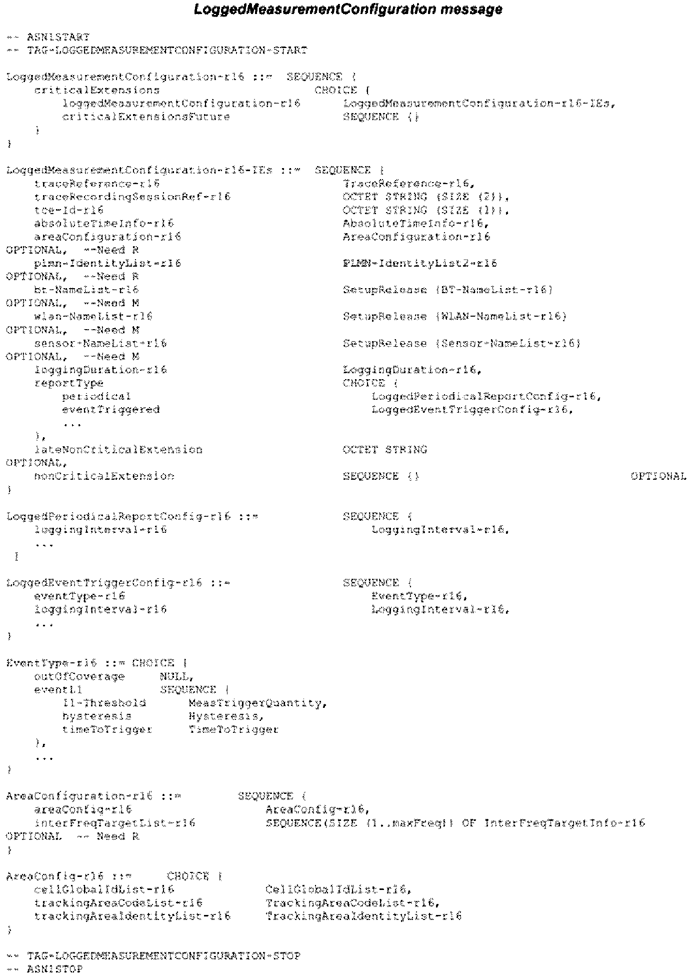

In the disclosure, for convenience of description, the NR cell 21-02 may configure the LoggedMeasurementConfiguration message as follows and transmit the LoggedMeasurementConfiguration message to the UE 21-01 in the RRC connected mode.
• Set reportType to eventTriggered and set eventType of LoggedEventTriggeredConfig to outOfCoverage
■ Accordingly, the UE may store the reportType received from the NR cell 21-02 in VarLogMeasConFIG.
• Including or not including plmn-IdentityList
■ If plmn-IdentityList is included in the message, the UE may include and set the RPLMN and one or more public land mobile networks (PLMNs) received in plmn-IdentityList included in the message, in plmn-IdentityList of VarLogMeasReport (if the LoggedMeasurementConfiguration message includes plmn-IdentityList, the UE shall set plmn-IdentityList in VarLogMeasReport to include the RPLMN as well as the PLMNs included in plmn-IdentityList).
■ If plmn-IdentityList is not included in the message, the UE may include and set RPLMN in plmn-IdentityList of VarLogMeasReport (if the LoggedMeasurementConfiguration message does not include plmn-IdentityList, the UE shall set plmn-IdentityList in VarLogMeasReport to include the RPLMN).
• Including or not including AreaConfiguration
■ If AreaConfiguration is included in the message, the LTE may perform measurement logging only in the area indicated by AreaConfiguration.
■ If AreaConfiguration is not included in the message, the LTE may perform measurement logging if the RPLMN is included in the plmn-IdentityList stored in VarLogMeasReport.
• Including loggingDuration value
■ The UE may drive the T330 timer by setting the T330 timer value as the loggingDuration value.

In step 21-30, the LTE 21-01 in the RRC connected mode may be released from the RRC connection with the NR base station 21-02 so that the UE may transition to the RRC idle mode (RRC_IDLE) or the RRC inactive mode (RRC_INACTIVE). For example, the UE 21-01 in the RRC connected mode may receive the RRCRelease message from the NR base station 21-02 and may transition to the RRC idle mode (RRC_IDLE) or the RRC inactive mode (RRC_INACTIVE).

In step 21-35, the UE 21-01 in the RRC idle mode or the RRC inactive mode may camp on the suitable NR cell by performing a cell selection process or a cell reselection process. The suitable NR cell may refer to the NR cell (NR cell 1) in step 21-15 or a new NR cell (NR cell 2).

In step 21-40, the LTE in the RRC idle mode or the RRC inactive mode may not camp on any cell because it may not find a suitable NR cell. A state in which the RRC idle mode or the RRC inactive mode UE does not camp on any cell may be referred to as an 'any cell selection state'. In other words, it may mean that the RRC idle mode or the RRC inactive mode UE is in out of coverage.

In step 21-45, if the T330 timer driven in step 21-25 keeps running, the RRC idle mode or the RRC inactive mode UE may perform a logging operation according to the following conditions.
• Conditions: if the reportType is set to eventTriggered, and eventType is set to outOfCoverage
• Determine whether logging is performed: Only when the condition is met and the RRC idle mode or RRC inactive mode UE is in any cell selection state, the UE may periodically log according to the loggingInterval defined in VarLogMeasConfig (perform the logging at regular time intervals as defined by the loggingInterval in VarLogMeasConfig only when the UE is in any cell selection state).
• Logging operation: When logging is performed in any cell selection state, the LTE may log the following information.
■ Log anyCellSelectionDetected to indicate that no cell has been found (set anyCellSelectionDetected to indicate the detection of no suitable or no acceptable cell found)
■ When the following condition A is met, the UE may log servCellIdentity indicating the global cell identity of the most recently camped-on cell (set the servCellIdentity to indicate global cell identity of the last cell that the UE was camping on) and log the measurement result of the most recently camped-on cell into measResultServingCell (set the measResultServingCell to include the quantities of the last cell that the LTE was camping on). The global cell identity consists of the first PLMN entry of plmn-IdentityList in SIB 1 broadcast by the cell, the cell identity mapped thereto, and the tracking area code to which the cell identity belongs. The measurement result of the cell may mean an SSB-based cell measurement result (RSRP, RSRP, and/or SINR) and a best SSB index, a beam measurement result (RSRP, RSRQ, and/or SINR) of the best SSB, the number of SSB beams exceeding a threshold value of absThresholdSS-BlocksConsolidation (in SIB2), and the like. According to the disclosure, the most recently camped-on cell may refer to NR suitable cell 1 or NR suitable cell 2 selected or reselected by the UE In steps 21-35.
■ Condition A: When reportType in VarLogMeasConfig is set to eventTriggered, and plmn-IdentityList stored in VarLogMeasReport includes the RPLMN when the UE enters any cell selection state, and VarLogMeasConfig does not include areaConfiguration or the cell which the LTE camped on most recently belongs to the area indicated by areaConfig in VarLogMeasConfig (if the reportType is set to eventTriggered in the VarLogMeasConfig; and if the RPLMN at the time of entering the any cell selection state is included in plmn-IdentityList stored in VarLogMeasReport; and if areaConfiguration is not included in VarLogMeasConfig or if the last cell that the LTE was camping on is part of the area indicated by areaConfig of areaConfiguration in VarLogMeasConfig)

In step 21-50, the RRC idle mode or the RRC inactive mode LTE may not find a suitable NR cell in any cell selection state and may select or reselect an acceptable cell. The definition of the acceptable cell may follow the 3GPP TS 38.304 standard. When the UE selects or reselects the acceptable cell in the inactive mode, the UE may transition to the RRC idle mode. The state in which the RRC idle mode LTE camps on the acceptable cell may be referred to as a 'Camped on Any Cell state'. The UE may be provided with a limited service through the acceptable cell. In other words, the UE may originate emergency calls or may receive an earthquake and tsunami warning system (ETWS) or a commercial mobile alert system (CMAS) notification. The acceptable cell may be an NR cell or an E-UTRA cell. In the disclosure, for convenience of description, the acceptable cell may be referred to as cell 3.

In step 21-55, the RRC idle mode UE may not camp on any cell because it may not find a suitable cell or an acceptable cell. In other words, it may mean that the RRC idle mode UE is in out of coverage.

In step 21-60, if the T330 timer driven in step 21-25 keeps running, the RRC idle mode UE may perform logging according to the following conditions.
- Conditions: if the reportType is set to eventTriggered, and eventType is set to outOfCoverage
- Determine whether logging is performed: Only when the condition is met and the RRC idle mode LTE is in any cell selection state, the LTE may periodically log according to the loggingInterval defined in VarLogMeasConfig (perform the logging at regular time intervals as defined by the loggingInterval in VarLogMeasConfig only when the UE is in any cell selection state).
- Logging operation: When the UE performs logging in any cell selection state, the LTE may log the following information.

Log anyCellSelectionDetected to indicate that no cell has been found (set anyCellSelectionDetected to indicate the detection of no suitable or no acceptable cell found)

When above-described condition A is satisfied or met, the LTE may log servCellIdentity indicating the global cell identity of the most recently camped-on cell (set the servCellIdentity to indicate global cell identity of the last cell that the LTE was camping on) and log the measurement result of the most recently camped-on cell into measResultServingCell (set the measResultServingCell to include the quantities of the last cell that the UE was camping on). The global cell identity consists of the first PLMN entry of plmn-IdentityList in SIB1 broadcast by the cell, the cell identity mapped thereto, and the tracking area code to which the cell identity belongs. The measurement result of the cell may mean an SSB-based cell measurement result (RSRP, RSRP, and/or SINR) and a best SSB index, a beam measurement result (RSRP, RSRQ, and/or SINR) of the best SSB, the number of SSB beams exceeding a threshold value of absThresholdSS-BlocksConsolidation (in SIB2), and the like. According to the disclosure, the most recently camped-on cell may refer to the acceptable cell (cell 3) selected or reselected by the UE in steps 21-50.

In step 21-61, the RRC idle mode UE 21-01 may select or reselect the suitable NR cell 21-03. In the disclosure, for convenience of description, the suitable NR cell 21-03 may be referred to as NR cell 4.

In step 21-65, the RRC idle mode UE 21-01 may transition to the RRC connected mode by performing an RRC connection establishment procedure with the suitable NR cell 21-03. In this case, the suitable NR cell 21-03 may be an NR primary cell (PCell).

In step 21-70, the UE 21-01 that has transitioned to the RRC connected mode may transmit the RRCSetupComplete message to the NR PCell 21-03. If the UE has the measurement result logged for NR, and the current RPLMN of the UE is included in plmn-IdentityList stored in VarLogMeasReport (if the UE has logged measurements available for NR and if the RPLMN is included in plmn-IdentityList stored in VarLogMeasReport), the UE may include logMeasAvailable in the RRCSetupComplete message and transmit it to the NR PCell 21-03.

In step 21-75, the RRC connected mode UE 21-01 and the NR cell 4 21-03 may establish the DRB with the SRB2 through an RRC reconfiguration procedure.

In step 21-80, the NR cell 4 21-03 may transmit a UEInformationRequest message to the RRC connected mode UE 21-01. The message may include logMeasReportReq.

In step 21-85, when logMeasReportReq is present in the UEInformationRequest message received in step 21-80 and the current RPLMN of the UE is included in the plmn-IdentityList stored in the VarLogMeasReport, the RRC connected mode UE 21-01 may transmit the UEInformationResponse message including the LogMeasReport to the NR cell 4 21-03.

A LTE according to an embodiment of the disclosure has the problem of logging the global cell identity and the measurement result value for an acceptable cell and reporting it to the cell belonging to the RPLMN or equivalent PLMN list. Since the PLMN to which the acceptable cell belongs typically refers to a business operator different from the business operator to which the LTE subscribes, a security issue may arise when the LTE records/logs information about the cell of the business operator to which the UE does not subscribe and reports it to the business operator to which the LTE belongs.

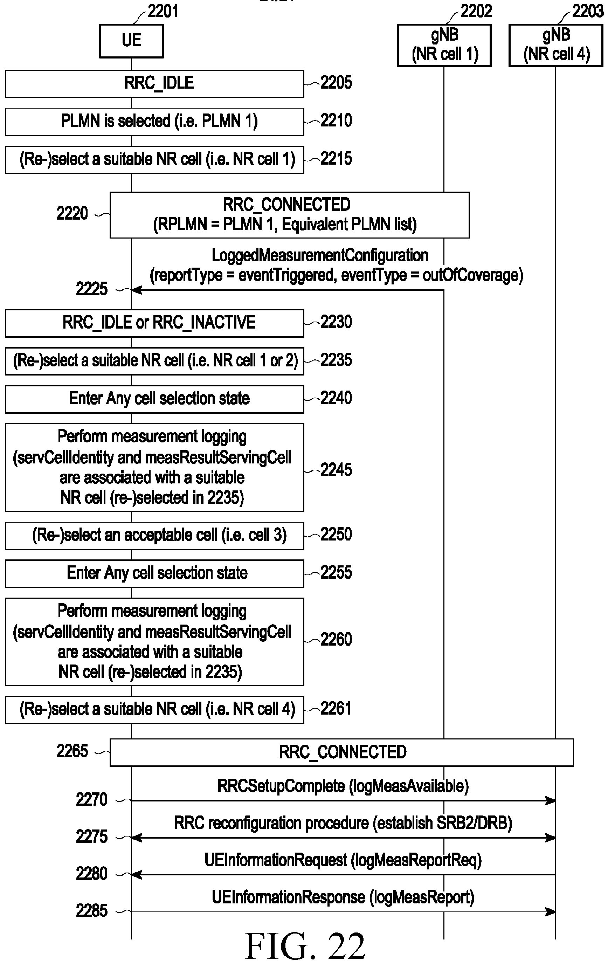

FIG. 22 is a view illustrating a procedure in which a UE performs measurement logging according to out of coverage based on an event set by an NR base station and reports the logged measurement value to the NR base station according to an embodiment of the disclosure.

Referring to FIG. 22, the UE 22-01 may be in the RRC idle mode (RRC_IDLE) (22-05).

In step 22-10, the LTE 22-01 may select a specific PLMN by performing a public land mobile network (PLMN) selection procedure. In the disclosure, for convenience of description, the PLMN selected by the UE is referred to as PLMN 1.

In step 22-15, the LTE 22-01 may select or reselect a suitable NR cell belonging to the PLMN selected in step 22-10. The definition of the suitable NR cell may follow the 3GPP TS 38.304 standard. The UE camping on the suitable NR cell is in the 'Camped Normally state'. In the disclosure, for convenience of description, the suitable NR cell selected or reselected by the UE may be referred to as NR cell 1.

In step 22-20, the UE 22-01 may perform an RRC connection establishment procedure with the suitable NR cell 22-02 selected or reselected In step 22-10 to transition to the RRC connected mode. The UE 22-01 may successfully perform the NAS registration procedure after the RRC connection establishment procedure to the suitable NR cell 22-02, and thus the PLMN selected by the UE 22-01 in step 22-10 may be registered in the NR system. In other words, the PLMN selected by the UE 22-01 in step 22-10 may become a registered PLMN (RPLMN). Additionally, the RRC connected mode UE may receive the equivalent PLMN list through the NAS registration procedure and manage/store/use the equivalent PLMN list. The equivalent PLMN list may refer to a list of PLMNs which the UE 22-01 may regard as the same as the RPLMM in a subsequent cell selection, cell reselection, and handover process. In other words, the UE 22-01 does not need to perform a separate NAS registration procedure when handing over from the cell belonging to the equivalent PLMN list to the cell (re)selected or belonging to the equivalent PLMN list. For example, the cell belonging to the equivalent PLMN list may be a suitable NR cell.

In step 22-25, the UE 22-01 in the RRC connected mode may receive a LoggedMeasurementConfiguration message from the NR cell 22-02. The information included in the message is as follows.

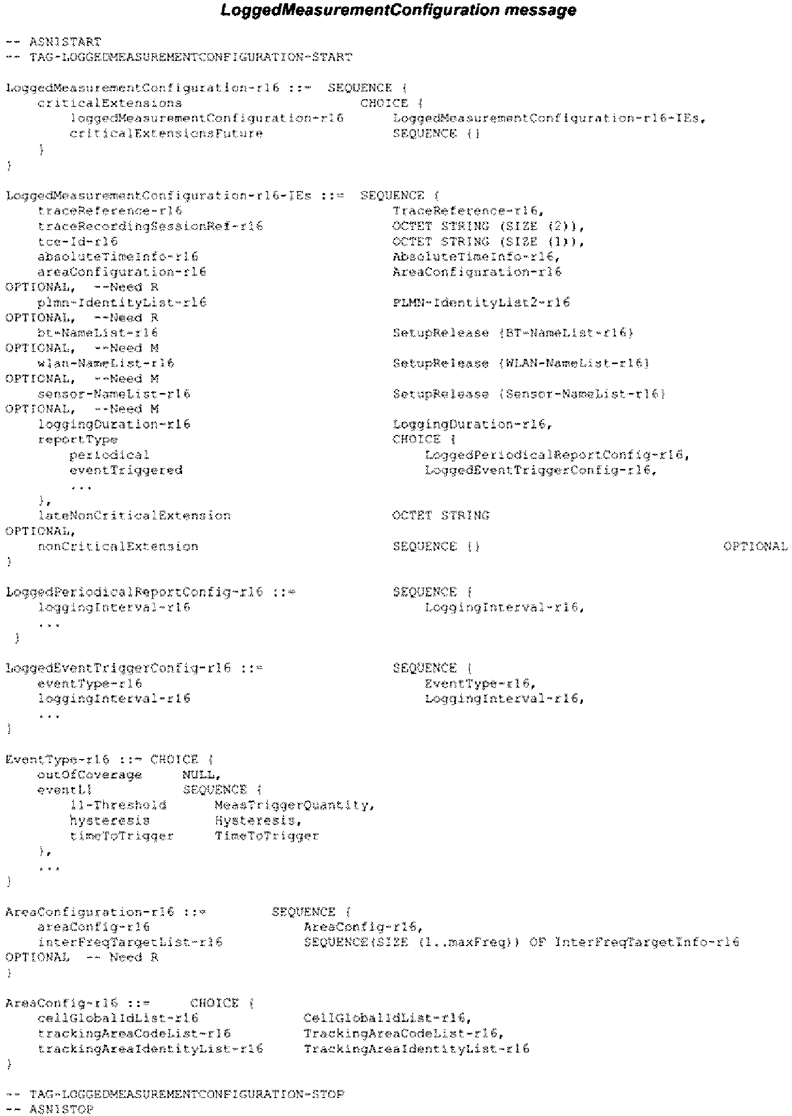

In the disclosure, for convenience of description, the NR cell 22-02 may configure the LoggedMeasurementConfiguration message as follows and transmit the LoggedMeasurementConfiguration message to the UE 22-01 in the RRC connected mode.
• Set reportType to eventTriggered and set eventType of LoggedEventTriggeredConfig to outOfCoverage
■ Accordingly, the UE 22-01 may store the reportType received from the NR cell 22-02 in VarLogMeasConFIG.
• Including or not including plmn-IdentityList
■ If plmn-IdentityList is included in the message, the UE may include and set the RPLMN and one or more public land mobile networks (PLMNs) received in plmn-IdentityList included in the message, in plmn-IdentityList of VarLogMeasReport (if the LoggedMeasurementConfiguration message includes plmn-IdentityList, the UE shall set plmn-IdentityList in VarLogMeasReport to include the RPLMN as well as the PLMNs included in plmn-IdentityList).
■ If plmn-IdentityList is not included in the message, the UE may include and set RPLMN in plmn-IdentityList of VarLogMeasReport (if the LoggedMeasurementConfiguration message does not include plmn-IdentityList, the UE shall set plmn-IdentityList in VarLogMeasReport to include the RPLMN).
• Including or not including AreaConfiguration
■ If AreaConfiguration is included in the message, the LTE may perform measurement logging only in the area indicated by AreaConfiguration.
■ If AreaConfiguration is not included in the message, the LTE may perform measurement logging if the RPLMN is included in the plmn-IdentityList stored in VarLogMeasReport.
• Including loggingDuration value
■ The UE may drive the T330 timer by setting the T330 timer value as the loggingDuration value.

In step 22-30, the LTE 22-01 in the RRC connected mode may be released from the RRC connection with the NR base station 22-02 so that the UE 22-01 may transition to the RRC idle mode (RRC IDLE) or the RRC inactive mode (RRC INACTIVE). For example, the UE 22-01 in the RRC connected mode may receive the RRCRelease message from the NR base station 22-02 and may transition to the RRC idle mode (RRC _IDLE) or the RRC inactive mode (RRC_INACTIVE).

In step 22-35, the UE 22-01 that has transitioned to the RRC idle mode or the RRC inactive mode may camp on the suitable NR cell by performing a cell selection process or a cell reselection process. The suitable NR cell may refer to the NR cell (NR cell 1) in step 22-15 or a new NR cell (NR cell 2).

In step 22-40, the UE 22-01 in the RRC idle mode or the RRC inactive mode may not camp on any cell because it may not find a suitable NR cell. A state in which the UE 22-01 in the RRC idle mode or the RRC inactive mode does not camp on any cell may be referred to as an 'any cell selection state'. In other words, the UE 22-01 in the RRC idle mode or the RRC inactive mode in the 'any cell selection state' may be in the out of coverage state.

In step 22-45, if the T330 timer driven in step 22-25 keeps running, the RRC idle mode or the RRC inactive mode UE 22-01 may perform a logging operation according to the following conditions.
• Conditions: if the reportType is set to eventTriggered, and eventType is set to outOfCoverage
• Determine whether logging is performed: Only when the condition is met and the RRC idle mode or RRC inactive mode UE is in any cell selection state, the UE may periodically log according to the loggingInterval defined in VarLogMeasConfig (perform the logging at regular time intervals as defined by the loggingInterval in VarLogMeasConfig only when the UE is in any cell selection state).
• Logging operation: When logging is performed in any cell selection state, the LTE may log the following information.
■ Log anyCellSelectionDetected to indicate that no cell has been found (set anyCellSelectionDetected to indicate the detection of no suitable or no acceptable cell found)
■ When the following condition A is met, the disclosure proposes that the LTE logs servCellIdentity indicating the global cell identity of the most recently camped-on suitable NR cell (set the servCellIdentity to indicate global cell identity of the last suitable cell that the UE was camping on) and log the measurement result of the mostly recently camped-on suitable NR cell into measResultServingCell (set the measResultServingCell to include the quantities of the last suitable cell that the UE was camping on). The global cell identity consists of the first PLMN entry of plmn-IdentityList in SIB 1 broadcast by the suitable NR cell, the cell identity mapped thereto, and the tracking area code to which the cell identity belongs. The measurement result of the cell may mean an SSB-based cell measurement result (RSRP, RSRP, and/or SINR) and a best SSB index, a beam measurement result (RSRP, RSRQ, and/or SINR) of the best SSB, the number of SSB beams exceeding a threshold value of absThresholdSS-BlocksConsolidation (in SIB2), and the like. Accordingly, the NR suitable cell that the LTE has most recently camped on may mean the suitable NR cell 1 or the suitable NR cell 2 selected or reselected by the UE In step 22-35.

Condition A: When reportType in VarLogMeasConfig is set to eventTriggered, and plmn-IdentityList stored in VarLogMeasReport includes the RPLMN when the UE enters any cell selection state, and VarLogMeasConfig does not include areaConfiguration or the cell which the LTE camped on most recently belongs to the area indicated by areaConfig in VarLogMeasConfig (if the reportType is set to eventTriggered in the VarLogMeasConfig; and if the RPLMN at the time of entering the any cell selection state is included in plmn-IdentityList stored in VarLogMeasReport; and if areaConfiguration is not included in VarLogMeasConfig or if the last cell that the LTE was camping on is part of the area indicated by areaConfig of areaConfiguration in VarLogMeasConfig)

In step 22-50, the UE 22-01 in the RRC idle mode or the RRC inactive mode may not find a suitable NR cell in any cell selection state and may select or reselect an acceptable cell. The definition of the acceptable cell may follow the 3GPP TS 38.304 standard. When the UE 22-01 selects or reselects the acceptable cell in the inactive mode, the UE may transition to the RRC idle mode. The state in which the RRC idle mode UE 22-01 camps on the acceptable cell may be referred to as a 'Camped on Any Cell state'. The UE 22-01 may be provided with a limited service through the acceptable cell. In other words, the UE 22-01 may originate emergency calls or may receive an earthquake and tsunami warning system (ETWS) or a commercial mobile alert system (CMAS) notification. The acceptable cell may be an NR cell or an E-UTRA cell. In the disclosure, for convenience of description, the acceptable cell may be referred to as cell 3.

In step 22-55, the RRC idle mode UE 22-01 may not camp on any cell because it may not find a suitable cell or an acceptable cell. In other words, it may mean that the RRC idle mode UE is in out of coverage.

In step 22-60, if the T330 timer driven in step 22-25 keeps running, the RRC idle mode UE may perform logging according to the following conditions.
- Conditions: if the reportType is set to eventTriggered, and eventType is set to outOfCoverage
- Determine whether logging is performed: Only when the condition is met and the RRC idle mode LTE is in any cell selection state, the LTE may periodically log according to the loggingInterval defined in VarLogMeasConfig (perform the logging at regular time intervals as defined by the loggingInterval in VarLogMeasConfig only when the UE is in any cell selection state).
- Logging operation: When the UE performs logging in any cell selection state, the LTE may log the following information.

Log anyCellSelectionDetected to indicate that no cell has been found (set anyCellSelectionDetected to indicate the detection of no suitable or no acceptable cell found)
■ When the above-described condition A is satisfied or met, the disclosure proposes that the UE logs servCellIdentity indicating the global cell identity of the most recently camped-on suitable NR cell (set the servCellIdentity to indicate global cell identity of the last suitable cell that the UE was camping on) and log the measurement result of the mostly recently camped-on suitable NR cell into measResultServingCell (set the measResultServingCell to include the quantities of the last suitable cell that the UE was camping on). The global cell identity consists of the first PLMN entry of plmn-IdentityList in SIB1 broadcast by the suitable NR cell, the cell identity mapped thereto, and the tracking area code to which the cell identity belongs. The measurement result of the cell may mean an SSB-based cell measurement result (RSRP, RSRP, and/or SINR) and a best SSB index, a beam measurement result (RSRP, RSRQ, and/or SINR) of the best SSB, the number of SSB beams exceeding a threshold value of absThresholdSS-BlocksConsolidation (in SIB2), and the like. Accordingly, the NR suitable cell that the UE according to the disclosure has most recently camped on may mean the suitable NR cell 1 or the suitable NR cell 2 selected or reselected by the UE in step 22-35.

Alternatively, when the above-described condition A is satisfied or met, in the disclosure, the UE may not log servCellIdentity and measResultServingCell when the last cell camped before entering any cell selection state is an acceptable cell in step 22-55. This is because UE memory may be efficiently managed because the same servCellIdentity and measResultServingCell are not logged when logging periodically according to loggingInterval.

In step 22-61, the RRC idle mode UE 22-01 may select or reselect the suitable NR cell 22-03. In the disclosure, for convenience of description, the suitable NR cell 22-03 may be referred to as NR cell 4.

In step 22-65, the RRC idle mode UE 22-01 may transition to the RRC connected mode by performing an RRC connection establishment procedure with the suitable NR cell 22-03. In this case, the suitable NR cell 22-03 may be an NR primary cell (PCell).

In step 22-70, the UE 22-01 that has transitioned to the RRC connected mode may transmit the RRCSetupComplete message to the NR PCell 22-03. If the UE has the measurement result logged for NR, and the current RPLMN of the UE is included in plmn-IdentityList stored in VarLogMeasReport (if the UE has logged measurements available for NR and if the RPLMN is included in plmn-IdentityList stored in VarLogMeasReport), the UE may include logMeasAvailable in the RRCSetupComplete message and transmit it to the NR PCell 22-03.

In step 22-75, the RRC connected mode UE 22-01 and the NR cell 4 22-03 may establish the DRB with the SRB2 through an RRC reconfiguration procedure.

In step 22-80, the NR cell 4 22-03 may transmit a UEInformationRequest message to the RRC connected mode UE 22-01. The message may include logMeasReportReq.

In step 22-85, when logMeasReportReq is present in the UEInformationRequest message received in step 22-80 and the current RPLMN of the UE is included in the plmn-IdentityList stored in the VarLogMeasReport, the RRC connected mode UE 22-01 may transmit the UEInformationResponse message including the LogMeasReport to the NR cell 4 22-03.

A UE according to an embodiment of the disclosure does not log the global cell identity and the measurement result value for the acceptable cell, but logs the global cell identity and the measurement result value for the suitable NR cell and reports the same to the cell belonging to the RPLMN or equivalent PLMN list. Alternatively, a LTE according to an embodiment of the disclosure does not log servCellIdentity and measResultServingCell when the last cell camped before entering any cell selection state is an acceptable cell.

## Claims

1. An event-based logging method by a UE in a wireless communication system, comprising:
identifying that the LTE is in a radio resource control (RRC) idle state (RRC_IDLE) or RRC inactive state (RRC_INACTIVE) and fails to discover a suitable cell and an acceptable cell;
identifying that a registered public land mobile network (RPLMN) when the LTE fails to discover the suitable cell and the acceptable cell is included in a PLMN ID list;
logging a serving cell ID indicating a global cell ID of a suitable cell on which the UE most recently camped; and
logging a measurement result of the suitable cell on which the UE most recently camped.

2. The event-based logging method of claim 1, wherein in the RRC idle state or the RRC inactive state, a report type (reportType) is included in a measurement logging configuration (VarLogMeasConfig) for the UE, and
wherein the report type is set to "eventTriggered."

3. The event-based logging method of claim 2, wherein an area configuration (areaConfiguration) is not included in the measurement logging configuration (VarLogMeasConfig).

4. The event-based logging method of claim 2, wherein an area configuration (areaConfiguration) is included in the measurement logging configuration (VarLogMeasConfig), and
wherein the suitable cell on which the UE most recently camped is a portion of an area indicated by information in the area configuration (areaConfiguration).

5. The event-based logging method of claim 1, further comprising receiving, from a base station, configuration information about measurement logging (LoggedMeasurementConfiguration) performed by the UE in the RRC idle state or the RRC inactive state.

6. The event-based logging method of claim 1, wherein the suitable cell is a cell on which the UE may camp.

7. The event-based logging method of claim 6, wherein the suitable cell is a cell belonging to the RPLMN.

8. The event-based logging method of claim 6, wherein the acceptable cell is a cell that provides a limited service to the UE.

9. The event-based logging method of claim 8, wherein the acceptable cell is selected when the UE fails to discover the suitable cell in the RRC inactive state or the RRC inactive state.

10. A LTE performing event-based logging in a wireless communication system, comprising:
a transceiver; and
a processor configured to:
identify that the UE is in a radio resource control (RRC) idle state (RRC_IDLE) or RRC inactive state (RRC_INACTIVE) and fails to discover a suitable cell and an acceptable cell;
identify that a registered public land mobile network (RPLMN) when the LTE fails to discover the suitable cell and the acceptable cell is included in a PLMN ID list;
log a serving cell ID indicating a global cell ID of a suitable cell on which the LTE most recently camped; and
log a measurement result of the suitable cell on which the UE most recently camped.

11. The LTE of claim 10, wherein in the RRC idle state or the RRC inactive state, a report type (reportType) is included in a measurement logging configuration (VarLogMeasConfig) for the UE, and
wherein the report type is set to "eventTriggered."

12. The UE of claim 11, wherein an area configuration (areaConfiguration) is not included in the measurement logging configuration (VarLogMeasConfig).

13. The UE of claim 11, wherein an area configuration (areaConfiguration) is included in the measurement logging configuration (VarLogMeasConfig), and
wherein the suitable cell on which the UE most recently camped is a portion of an area indicated by information in the area configuration (areaConfiguration).

14. The LTE of claim 10, wherein the processor is configured to control to receive, from a base station, configuration information about measurement logging (LoggedMeasurementConfiguration) performed by the UE in the RRC idle state or the RRC inactive state.

15. The UE of claim 10, wherein the suitable cell is a cell which belongs to the RPLMN and on which the UE may camp, and
wherein the acceptable cell is a cell that provides a limited service to the UE.
